# EUROPÄISCHE PATENTSCHRIFT

(11) **EP 3 175 153 B1**
(45) Veröffentlichungstag und Bekanntmachung des Hinweises auf die Patenterteilung: **07.04.2021**
(21) Anmeldenummer: 15747384.4
(22) Anmeldetag: 23.07.2015
(51) Int. Cl.: F16H 63/30

(54) **HYDRAULISCHE BETÄTIGUNGSVORRICHTUNG FÜR DIE BETÄTIGUNG VON STELLGLIEDERN IN EINEM KRAFTFAHRZEUGGETRIEBE**
HYDRAULIC OPERATING DEVICE FOR OPERATING ACTUATORS IN A MOTOR VEHICLE TRANSMISSION
DISPOSITIF D'ACTIONNEMENT HYDRAULIQUE POUR ACTIONNER DES ACTIONNEURS DANS UNE BOÎTE DE VITESSES DE VÉHICULE AUTOMOBILE

(30) Priorität: 31.07.2014 DE 102014011176
(43) Veröffentlichungstag der Anmeldung: 07.06.2017
(73) Patentinhaber: FTE automotive GmbH, 96106 Ebern (DE)
(72) Erfinder: MACHT, Egid, 81247 München (DE); STÖSSEL, Roland, 97514 Oberaurach Trossenfurt (DE); STÖHR, Reinhold, 96106 Ebern (DE); FECKE, Karin, 97631 Bad Königshofen (DE); FUCHS, Dietmar, 96524 Föritz / OT Heubisch (DE); REUL, Alexander, 96158 Frensdorf (DE); WILL, Wilhelm, 97500 Rudendorf (DE); VOIGT, Christian, 96106 Ebern (DE); HEUBNER, Wilhelm, 96274 Itzgrund (DE)
(74) Vertreter: Oppermann, Mark
(86) Internationale Anmeldenummer: PCT/EP2015/001512
(87) Internationale Veröffentlichungsnummer: WO 2016/015844

(56) Entgegenhaltungen:
- EP-A1- 1 873 425
- WO-A1-2006/106074
- DE-A1- 10 342 389
- DE-A1-102011 084 585
- US-A1- 2009 165 638

## Beschreibung

### TECHNISCHES GEBIET

Die vorliegende Erfindung bezieht sich auf eine hydraulische Betätigungsvorrichtung für die Betätigung von Stellgliedern in einem Kraftfahrzeuggetriebe, gemäß dem Oberbegriff des Patentanspruchs 1.

Derartige Betätigungsvorrichtungen kommen etwa für automatisierte Schaltgetriebe in der Automobilindustrie massenweise zum Einsatz - dort auch "Gangsteller" genannt - und dienen hier beispielsweise dazu, an Schaltstangen des Getriebes befestigte Schaltgabeln zum Gangwechsel zu betätigen, d.h. zu verschieben und ggf. zu positionieren.

### STAND DER TECHNIK

Die den Oberbegriff des Patentanspruchs 1 bildende Druckschrift DE 103 42 389 A1 offenbart eine hydraulische Ansteuerungseinrichtung für ein Getriebe, umfassend insgesamt vier Stellzylinder (dort: Aktuator- bzw. Hydraulikzylindereinheiten), die ein Zylindergehäuse (Haupteinheit mit jeweiligen Zylinderräumen) und darin entlang von Zylinderachsen längsverschieblich geführte Stellkolben (Kolben) aufweisen, welche jeweils hydraulisch beaufschlagbar und mit einem der Stellglieder (Schaltstangen mit Schaltgabeln) des Getriebes wirkverbunden sind. Bei diesem Stand der Technik sind die Stellzylinder bereits montagefreundlich zu einer Baueinheit zusammengefasst, die über eine Flanschfläche von einer Seite an einer Gehäusetrennwand des Getriebes anflanschbar ist.

Ein Nachteil dieses Stands der Technik ist indes darin zu sehen, dass die vorbekannte, im Wesentlichen blockförmige Baueinheit insbesondere in Richtung der Zylinderachsen einen relativ großen Bauraum beansprucht und in ihrer massiven, metallischen Ausgestaltung auch verhältnismäßig schwer ist. Der zur Verfügung stehende Einbauraum am/im Getriebegehäuses ist in der Regel jedoch sehr knapp bemessen. Außerdem ist eine Gewichtsreduktion insbesondere im Hinblick auf die Kraftstoffverbrauchsproblematik beim Einsatz in modernen Kraftfahrzeugen wünschenswert.

Weitere Aktuatoren für KFZ-Automatgetriebe sind aus den Druckschriften US 2009/0165638 A1 und DE 10 2011 084 585 A1 bekannt.

### AUFGABENSTELLUNG

Der Erfindung liegt die Aufgabe zugrunde, eine möglichst leichte hydraulische Betätigungsvorrichtung für die Betätigung von Stellgliedern in einem Kraftfahrzeuggetriebe zu schaffen, welche die obigen Nachteile vermeidet und gegenüber dem geschilderten Stand der Technik insbesondere einen geringeren Bauraumbedarf hat.

### DARSTELLUNG DER ERFINDUNG

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 17.

Erfindungsgemäß sind bei einer hydraulischen Betätigungsvorrichtung für die Betätigung von Stellgliedern in einem Kraftfahrzeuggetriebe, welche wenigstens zwei Stellzylinder umfasst, die jeweils ein Zylindergehäuse und einen darin entlang einer Zylinderachse längsverschieblich geführten Stellkolben aufweisen, der hydraulisch beaufschlagbar und mit einem der Stellglieder wirkverbunden ist, wobei die Stellzylinder zu einer Einheit zusammengefasst sind, die über eine Flanschfläche von einer Seite an einer Trennwand eines Getriebegehäuses des Kraftfahrzeuggetriebes anflanschbar ist; die Zylindergehäuse der Stellzylinder einstückig mit einer quer zu den Zylinderachsen verlaufenden Flanschplatte aus einem Kunststoff spritzgegossen, an der die Flanschfläche ausgebildet ist, wobei die Zylindergehäuse in Richtung der Zylinderachsen wenigstens auf der Seite der Flanschfläche über die Flanschplatte hinaus vorstehen.

Mit anderen Worten gesagt hat jeder Stellzylinder sein eigenes Zylindergehäuse, wobei sämtliche Zylindergehäuse lediglich über die mit den Zylindergehäusen materialeinheitlich ausgebildete Flanschplatte miteinander verbunden sind. Im Vergleich zu der im gattungsbildenden Stand der Technik offenbarten Blockausgestaltung wird weiteres "Zwischenmaterial" zwischen den Zylindergehäusen vermieden. Dies, zu der Ausbildung aus Kunststoff, führt zu einer sehr leichten Betätigungsvorrichtung, die zudem mittels Spritzgießen auch sehr kostengünstig herstellbar ist, wobei die im gattungsbildenden Stand der Technik erforderlichen spanabhebenden Bearbeitungsschritte und der damit verbundene Aufwand entfallen. Dadurch, dass ferner die Zylindergehäuse in Richtung der Zylinderachsen gesehen wenigstens auf der Seite der Flanschfläche über die Flanschplatte hinaus vorstehen, so dass die Zylindergehäuse in dem am bzw. im Kraftfahrzeuggetriebe montierten Zustand der Betätigungsvorrichtung wenigstens teilweise in das Getriebegehäuse hineinragen und dabei zugeordnete Öffnungen in der Getriebegehäuse-Trennwand durchgreifen, an der die Betätigungsvorrichtung angeflanscht ist, wird insbesondere auch die Wanddicke der Getriebegehäuse-Trennwand als axialer Bauraum für die Stellzylinder mit genutzt, wodurch die gesamte Anordnung besonders kompakt baut. Der hier in der Getriebegehäuse-Trennwand "gewonnene" Bauraum kann zudem vorteilhaft der schützenden Aufnahme von am Außenumfang der Zylindergehäuse ggf. vorhandenen Sensoren, Kabeln etc. dienen.

In einer vorteilhaften Ausgestaltung der Betätigungsvorrichtung kann die Flanschplatte mit einer Mehrzahl von über den Umfang verteilten, senkrecht zur Flanschfläche verlaufenden Befestigungslöchern versehen sein, die mit Stützhülsen ausgekleidet sind, welche auf einer von der Flanschfläche abgewandten Seite mit einem Zugbund für Befestigungsschrauben versehen sind, die sich durch die Stützhülsen hindurch erstrecken und zur Montage der Betätigungsvorrichtung in zugeordnete Gewindebohrungen der Trennwand des Getriebegehäuses einschraubbar sind, um die Flanschfläche gegen die Trennwand zu ziehen. Die Kraftübertragung erfolgt hier somit über die vorzugsweise metallischen Stützhülsen, so dass der Kunststoff der Flanschplatte nicht überbelastet werden kann. Die Stützhülsen können in einfacher Weise mit in die Spritzgussform eingelegt und sodann umspritzt werden oder nach dem Spritzgussvorgang in die dabei ausgebildeten durchgehenden Befestigungslöcher in der Flanschplatte eingepresst werden.

Hierbei können die am weitesten voneinander entfernten Befestigungslöcher ein Festlager-Befestigungsloch und ein Loslager-Befestigungsloch bilden, an denen die Stützhülsen mit Zentrierfortsätzen für einen formschlüssigen Eingriff in zugeordneten Zentrieraussparungen in der Trennwand des Getriebegehäuses über die Flanschfläche vorstehen, während die übrigen Stützhülsen vor oder an der Flanschfläche enden, wobei das Festlager-Befestigungsloch die zugeordnete Stützhülse spielfrei umgibt, während das Loslager-Befestigungsloch als mit dem Festlager-Befestigungsloch ausgefluchtetes Langloch gestaltet ist, in dem die zugeordnete Stützhülse entsprechend der Ausfluchtung des Langlochs beweglich aufgenommen ist, so dass Abstandstoleranzen ausgleichbar sind. Insofern kann das Spritzgussteil relativ toleranzbehaftet sein, ohne dass dies einer korrekten Montage abträglich wäre. Außerdem können etwaige (Abstands)Maß- und Lagetoleranzen an den Zentrieraussparungen in der Trennwand des Getriebegehäuses leicht ausgeglichen werden.

In weiterer, bevorzugter Ausgestaltung der Befestigungssituation kann die Flanschplatte auf der von der Flanschfläche abgewandten Seite um das Loslager-Befestigungsloch herum mit einer Schräge versehen sein, die ein Einfedern des Zugbunds an der dem Loslager-Befestigungsloch zugeordneten Stützhülse gestattet bevor Letztere mit einer Stirnfläche an einer in der zugeordneten Zentrieraussparung vorgesehenen Anschlagfläche zur Anlage gelangt. Somit werden Axialtoleranzen in einfacher Weise elastisch federnd "überbrückt", so dass z.B. Dickentoleranzen an der Flanschplatte und/oder Toleranzen der Tiefe der entsprechenden Zentrieraussparung in der Trennwand des Getriebegehäuses leicht ausgleichbar sind.

Soweit der Flanschplatte der Betätigungsvorrichtung auch eine medientrennende Funktion zukommen soll, ist es grundsätzlich möglich, an der Flanschfläche eine Formdichtung vorzusehen, um die eine Seite der Flanschplatte gegenüber der zugeordneten Fläche am Getriebegehäuse abzudichten. Zur Bereitstellung einer solchen Dichtfunktion ist es jedoch bevorzugt, wenn die Flanschplatte im Bereich der Flanschfläche mit einer - spritzgusstechnisch leicht herstellbaren - umlaufenden Vertiefung zur Aufnahme einer Flanschdichtung versehen ist, die aus einem elastischen Dichtungswerkstoff, z.B. ACM (Elastomer auf Basis Acrylatkautschuk), in zwei Lagen aufgetragen einen breiteren, einer verliersicheren Verankerung an der Flanschplatte dienenden Basisabschnitt und einen dünneren, auf dem Basisabschnitt angeordneten Dichtabschnitt aufweist, der über die Flanschfläche vorsteht. Eine derartige Dichtung lässt sich leicht mittels automatisierter Nadeldosierung auftragen bzw. aufbringen, bei der die Dosiernadel in einer kontinuierlichen Bewegung über der Flanschfläche verfahren wird und dabei fortlaufend den (zunächst) pastösen Dichtungswerkstoff dosiert, wobei in einem ersten Gang der breitere Basisabschnitt für die Befestigungsfunktion und in einem zweiten Gang der dünnere Dichtabschnitt zur Herstellung der Dichtfunktion präzise und reproduzierbar appliziert wird. Der mit einer Formdichtung verbundene Montageaufwand wird somit vermieden.

Prinzipiell ist es möglich, die einzelnen Zylindergehäuse der Betätigungsvorrichtung "geschlossen" auszubilden und mit Druckanschlüssen zu versehen, über die die Stellkolben hydraulisch beaufschlagt werden können. Im weiteren Verfolg des Erfindungsgedankens ist es gleichwohl bevorzugt, wenn jedes Zylindergehäuse einen Zylinderraumabschnitt zur Aufnahme des jeweiligen Stellkolbens und einen sich parallel zum Zylinderraumabschnitt erstreckenden, hinter dem Stellkolben mit dem Zylinderraumabschnitt fluidverbundenen Druckanschlussabschnitt aufweist, die an ihren von der Flanschfläche beabstandeten, offenen Enden jeweils mit einer Druckdichtung versehen sind, welche gegenüber der Trennwand des Getriebegehäuses abdichtet, so dass der Stellkolben auf seiner einen Seite über das offene Ende des Zylinderraumabschnitts und auf seiner anderen Seite über das offene Ende des Druckanschlussabschnitts druckbeaufschlagbar ist. Somit werden ohnehin vorhandene Wände bzw. Wandflächen im Getriebegehäuse zur Begrenzung der Hydraulikabschnitte mit genutzt, was im Hinblick auf Bauraumbedarf der Betätigungsvorrichtung und Aufwand vorteilhaft ist.

Hierbei können die Zylinderraum- und Druckanschlussabschnitte an ihren offenen Enden jeweils mit einer Ringaussparung zur Aufnahme der zugeordneten, unter Druckbeaufschlagung die Dichtwirkung verstärkend ausgebildeten Druckdichtung versehen sein, wobei die Druckdichtung einen ringförmigen Grundkörper aufweist, der entweder zu beiden Längsseiten mit einer Dichtlippe versehen ist, die unter radialer Druckbeaufschlagung in axialer Richtung abdichtet, oder auf einer Längsseite mit einem über das jeweilige offene Ende vorstehenden Dichtwulst versehen ist, während auf der anderen Längsseite eine radial wirkende Dichtlippe vorgesehen ist, die zusammen mit einem Grundkörperfortsatz eine Ringkammer begrenzt, welche über radial verlaufende Durchbrüche im Grundkörperfortsatz druckbeaufschlagbar ist, um die Druckdichtung mit ihrem Dichtwulst kolbenartig gegen die Trennwand zu pressen. Mit diesen beiden Dichtungsvarianten können vorteilhaft axiale Toleranzen ausgeglichen und etwaige Verformungen der montierten Flanschplatte "überbrückt" werden.

In einer weiteren Dichtungsvariante können wenigstens die Druckdichtungen an den offenen Enden des Zylinderraumabschnitts und des Druckanschlussabschnitts eines jeden Zylindergehäuses zu einer Formdichtung zusammengefasst sein, die auf die offenen Enden aufsteckbar ausgebildet ist. Gegenüber Einzeldichtungen hat diese Dichtungsvariante den Vorteil der Montagevereinfachung.

Grundsätzlich ist es denkbar, die mit den Stellkolben wirkverbundenen Stellglieder, etwa die Schaltstangen, alleine im Getriebegehäuse bzw. dessen Wandungen geeignet zu führen. Demgegenüber bevorzugt ist es indes, wenn jedes Zylindergehäuse an einem über die Flanschplatte auf der von der Flanschfläche abgewandten Seite vorstehenden Ende mit einem Gehäusefortsatz zur Aufnahme einer Führungsbuchse versehen ist, in der eine mit dem jeweiligen Stellkolben verbundene Kolbenstange geführt ist, so dass der Betätigungsvorrichtung auch eine Führungs- bzw. Lagerfunktion für die Stellglieder zukommt. In diesem Fall können die Schaltstangen z.B. einfach als Rohr ausgebildet oder mit einem rohrförmigen Ende versehen sein, in das die Kolbenstange eingesteckt wird.

Soweit wiederum der Betätigungsvorrichtung auch eine medientrennende Funktion zukommen soll, und zur Verbessung des Druckaufbauverhaltens bei hydraulischer Beaufschlagung des Stellkolbens auf der Kolbenstangenseite, kann in dem Gehäusefortsatz auch eine mit der Kolbenstange zusammenwirkende, sich an die Führungsbuchse in axialer Richtung anschließende Stangendichtung aufgenommen sein, wobei vorteilhaft ein am Gehäusefortsatz angebrachter ringförmiger Deckel sowohl die Führungsbuchse als auch die Stangendichtung im Gehäusefortsatz sichert.

In einer besonders bevorzugten Ausgestaltung der Betätigungsvorrichtung kann jedem Zylindergehäuse ein Sensor zur Positionserfassung eines am jeweiligen Stellkolben angebrachten Signalelements zugeordnet sein, wobei in der Einheit eine mit den Sensoren signalverbundene elektrische Schnittstelle integriert ist, über welche die Sensoren gemeinsam kontaktierbar sind. Damit trägt die Betätigungsvorrichtung als solche schon die ggf. für die Erfassung der bewirkten Stellbewegungen benötigte Sensorik. Bei Montage der Betätigungsvorrichtung ist lediglich die Getriebesteuerung an die elektrische Schnittstelle der Betätigungsvorrichtung anzuschließen. Die im Stand der Technik übliche Montage von einzelnen Signalelementen und Sensoren an den Stellgliedern (Schaltstangen/Schaltgabeln) bzw. im Getriebegehäuse und deren Verkabelung können vorteilhaft entfallen. Neben dieser deutlichen Vereinfachung der Montage und Kontaktierung kann die Sensorik so auch schon vor Anbringung der Betätigungsvorrichtung vorgetestet und ggf. vorprogrammiert werden.

Im Hinblick auf eine noch höhere Integration von Funktionen in ein und derselben Einheit ist des Weiteren eine Ausgestaltung der Betätigungsvorrichtung bevorzugt, bei der ein Sensor zur Drehzahlsensierung am Kraftfahrzeuggetriebe und/oder ein Anschluss für einen Sensor zur Drehzahlsensierung in der Einheit integriert und zur gemeinsamen Kontaktierung mit der elektrischen Schnittstelle signalverbunden ist.

In einer besonders kompakten und montagefreundlichen Ausbildung der sensierten Betätigungsvorrichtung können zumindest die Sensoren zur Positionserfassung und die Schnittstelle über eine Flexleiterplatte signalverbunden sein, die der Außenkontur der Zylindergehäuse problemlos folgend auf der - im Getriebegehäuse besonders geschützten - Seite der Flanschfläche der Einheit verlegt ist.

Hierbei kann jedes Zylindergehäuse außenumfangsseitig eine Aufnahmeaussparung für den zugeordneten Sensor zur Positionserfassung aufweisen, wobei die Flexleiterplatte auf einer Seite mit den Sensoren bestückt ist und auf der anderen Seite im Bereich • der Sensoren Deckel trägt, die dazu dienen, die Aufnahmeaussparungen mit den darin aufgenommenen Sensoren schützend zu verschließen. Eine derart vorbestückte Baugruppe ist besonders einfach zu montieren; eine nachträgliche elektrische Verschaltung der einzelnen Bauteile entfällt.

Entsprechendes gilt für eine alternative, noch besser gegen Umgebungseinflüsse wie Feuchtigkeit, Temperatur und Betriebsmedien geschützte Variante der sensierten Betätigungsvorrichtung, bei der jedes Zylindergehäuse außenumfangsseitig einen von zwei parallelen, einander zugewandten Längsnuten seitlich begrenzten Aufnahmeabschnitt für den zugeordneten Sensor zur Positionserfassung aufweist, wobei jeder auf der Flexleiterplatte bestückte Sensor auf ein und derselben Seite der Flexleiterplatte von einem Rahmen umgeben ist, der mit dem jeweiligen Sensor und der Flexleiterplatte vermittels eines Dichtmaterials vergossen ist und auf voneinander abgewandten Seiten zwei quer zur Flexleiterplatte verlaufende, parallele Stege aufweist, die in die Längsnuten am Aufnahmeabschnitt des jeweiligen Zylindergehäuses einsteckbar sind, um den zugeordneten Sensor festzulegen.

Bei der sensierten Betätigungsvorrichtung können ferner nahe den Zylindergehäusen Zungen zum Halten und Führen der Flexleiterplatte einstückig an der Flanschplatte angeformt sein, was nicht nur eine besonders einfache Form der Positionierung und Befestigung der Flexleiterplatte darstellt, sondern auch beim Spritzgießen aus Kunststoff problemlos mit erzeugt werden kann.

Schließlich ist es bei der sensierten Betätigungsvorrichtung grundsätzlich möglich, an den Stellkolben geeignet eingeklipste Magnete als Signalelemente zu verwenden. Im Hinblick auf die Befestigungssicherheit ist allerdings eine Ausgestaltung bevorzugt, bei der jeder Stellkolben mit einem Sensierfortsatz versehen ist, an dem ein Magnet als Signalelement durch Kunststoffumspritzen angebracht ist.

### KURZE BESCHREIBUNG DER ZEICHNUNGEN

Im Folgenden wird die Erfindung anhand bevorzugter Ausführungsbeispiele unter Bezugnahme auf die beigefügten, z.T. schematischen Zeichnungen näher erläutert, in denen zur Vereinfachung der Darstellung elastomere bzw. elastische Teile im unverformten Zustand dargestellt sind. In den Zeichnungen zeigen:
- Fig. 1: eine perspektivische Ansicht einer hydraulischen Betätigungsvorrichtung für die Betätigung von Stellgliedern in einem Kraftfahrzeuggetriebe nach einem bevorzugten Ausführungsbeispiel der Erfindung im nicht-montierten Zustand von schräg oben / vorne mit Blick auf die von einer Flanschfläche der Betätigungsvorrichtung abgewandten Seite der Betätigungsvorrichtung;
- Fig. 2: eine perspektivische Ansicht der Betätigungsvorrichtung gemäß Fig. 1 im nicht-montierten Zustand von schräg unten / hinten mit Blick auf die Flanschfläche der Betätigungsvorrichtung, über die die Betätigungsvorrichtung an einer Trennwand eines Getriebegehäuses des Kraftfahrzeuggetriebes angeflanscht werden kann;
- Fig. 3: eine gegenüber dem Maßstab der Fig. 1 und 2 verkleinerte Vorderansicht der Betätigungsvorrichtung gemäß Fig. 1 in einem an einem abgebrochen dargestellten Getriebegehäuse montierten Zustand;
- Fig. 4: eine abgebrochene, vergrößerte Schnittansicht der Betätigungsvorrichtung gemäß Fig. 1 im montierten Zustand entsprechend der Schnittverlaufslinie IV-IV in Fig. 3, zur Illustration eines Festlager-Befestigungspunkts der Betätigungsvorrichtung am Getriebegehäuse;
- Fig. 5: eine abgebrochene, vergrößerte Schnittansicht der Betätigungsvorrichtung gemäß Fig. 1 im montierten Zustand entsprechend der Schnittverlaufslinie V-V in Fig. 3, wobei die Schnittebene entlang einer Zylinderachse eines der Stellzylinder der Betätigungsvorrichtung verläuft und auf der in Fig. 5 rechten Seite exemplarisch auch die Anbindung einer Schaltstange als Stellglied des Kraftfahrzeuggetriebes an eine Kolbenstange des Stellzylinders dargestellt ist;
- Fig. 6: eine gegenüber dem Maßstab der Fig. 5 vergrößerte Ansicht des Details VI in Fig. 5, zur Veranschaulichung einer ersten Variante von Druckdichtungen an einem Zylinderraumabschnitt des Stellzylinders;
- Fig. 7: eine gegenüber dem Maßstab der Fig. 5 vergrößerte Ansicht des Details VII in Fig. 5, zur Illustration einer Flanschdichtung an der an einer Flanschplatte der Betätigungsvorrichtung ausgebildeten Flanschfläche der Betätigungsvorrichtung;
- Fig. 8: eine abgebrochene, vergrößerte Schnittansicht der Betätigungsvorrichtung gemäß Fig. 1 im montierten Zustand entsprechend der Schnittverlaufslinie VIII-VIII in Fig. 3, zur exemplarischen Darstellung weiterer Befestigungspunkte der Betätigungsvorrichtung am Getriebegehäuse;
- Fig. 9: eine abgebrochene, vergrößerte Schnittansicht der Betätigungsvorrichtung gemäß Fig. 1 im montierten Zustand entsprechend der Schnittverlaufslinie IX-IX in Fig. 3, zur Illustration eines Loslager-Befestigungspunkts der Betätigungsvorrichtung am Getriebegehäuse;
- Fig. 10: eine gegenüber dem Maßstab der Fig. 1 verkleinerte Rückansicht der Betätigungsvorrichtung gemäß Fig. 1 im nicht-montierten Zustand, mit Blickrichtung senkrecht auf die Flanschfläche;
- Fig. 11: eine abgebrochene, vergrößerte Schnittansicht der Betätigungsvorrichtung gemäß Fig. 1 entsprechend der Schnittverlaufslinie XI-XI in Fig. 10, zur weiteren Illustration des Loslager-Befestigungspunkts der Betätigungsvorrichtung;
- Fig. 12: eine abgebrochene, vergrößerte Schnittansicht der Betätigungsvorrichtung gemäß Fig. 1 entsprechend der zur Schnittverlaufslinie XI-XI senkrechten Schnittverlaufslinie XII-XII in Fig. 10, wobei der Loslager-Befestigungspunkt der Betätigungsvorrichtung in einer Ebene geschnitten gezeigt ist, die zentral durch den Festlager-Befestigungspunkt der Betätigungsvorrichtung hindurch verläuft (siehe die gestrichelt verlängerte Schnittverlaufslinie);
- Fig. 13: eine abgebrochene, vergrößerte Schnittansicht der Betätigungsvorrichtung gemäß Fig. 1 entsprechend der Schnittverlaufslinie XIII-XIII in Fig. 10, zur Veranschaulichung weiterer Details der Stellzylinder der Betätigungsvorrichtung in einer zur StellzylinderSchnittebene der Fig. 5 senkrecht verlaufenden Stellzylinder-Schnittebene;
- Fig. 14: eine nach links und unten abgebrochene, vergrößerte Schnittansicht einer Betätigungsvorrichtung mit Schnittverlauf entsprechend der Schnittverlaufslinie XIV-XIV in Fig. 10, zur Illustration einer zweiten Variante der Druckdichtungen an den Stellzylindern, die sich von der ersten Variante gemäß Fig. 6 unterscheidet;
- Fig. 15: eine perspektivische Ansicht einer auf einer Seite mit Sensoren und (Einsteck)Rahmen zur Befestigung an einer Betätigungsvorrichtung bestückten Flexleiterplatte einer integrierten Sensorik der Betätigungsvorrichtung im nicht-montierten Zustand, als Alternative zu der in den Fig. 2, 5 und 10 im montierten Zustand gezeigten Flexleiterplatte der Sensorik, die im Gegensatz zur Flexleiterplatte von Fig. 15 auf gegenüberliegenden Seiten mit Sensoren und (Verschluss)Deckeln bestückt ist;
- Fig. 16: eine hinsichtlich des Schnittverlaufs im Stellzylinder der Fig. 5 entsprechende, abgebrochene Schnittansicht der nicht-montierten Betätigungsvorrichtung im Endbereich des dem Festlager-Befestigungspunkt nächstgelegenen Stellzylinders, mit montierter Flexleiterplatte von Fig. 15;
- Fig. 17: eine abgebrochene Schnittansicht der Betätigungsvorrichtung entsprechend der Schnittverlaufslinie XVII-XVII in Fig. 16;
- Fig. 18: eine perspektivische Explosionsdarstellung einer Betätigungsvorrichtung im nicht-montierten Zustand von schräg oben / hinten mit Blick auf die Flanschfläche, zur Veranschaulichung von Stellzylinder-Druckdichtungen gemäß einer von den Varianten der Fig. 6 und 14 verschiedenen, dritten Variante der Druckdichtungen;
- Fig. 19: eine hinsichtlich des Schnittverlaufs der Fig. 13 entsprechende Schnittansicht der Betätigungsvorrichtung im nicht-montierten Zustand, zur weiteren Illustration der montierten Druckdichtungen nach der dritten Variante gemäß Fig. 18; und
- Fig. 20: eine gegenüber dem Maßstab der Fig. 19 vergrößerte Ansicht des Details XX in Fig. 19.

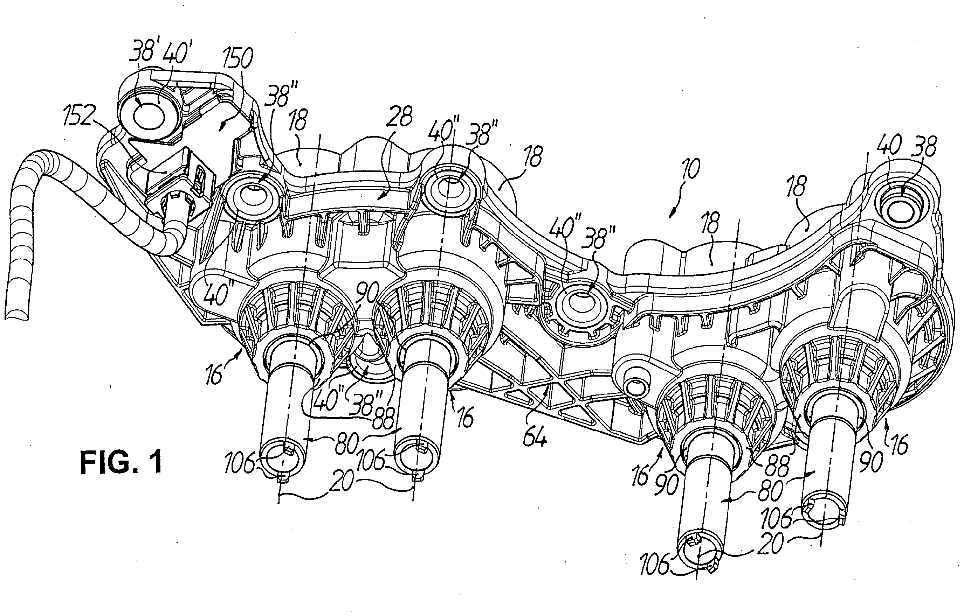

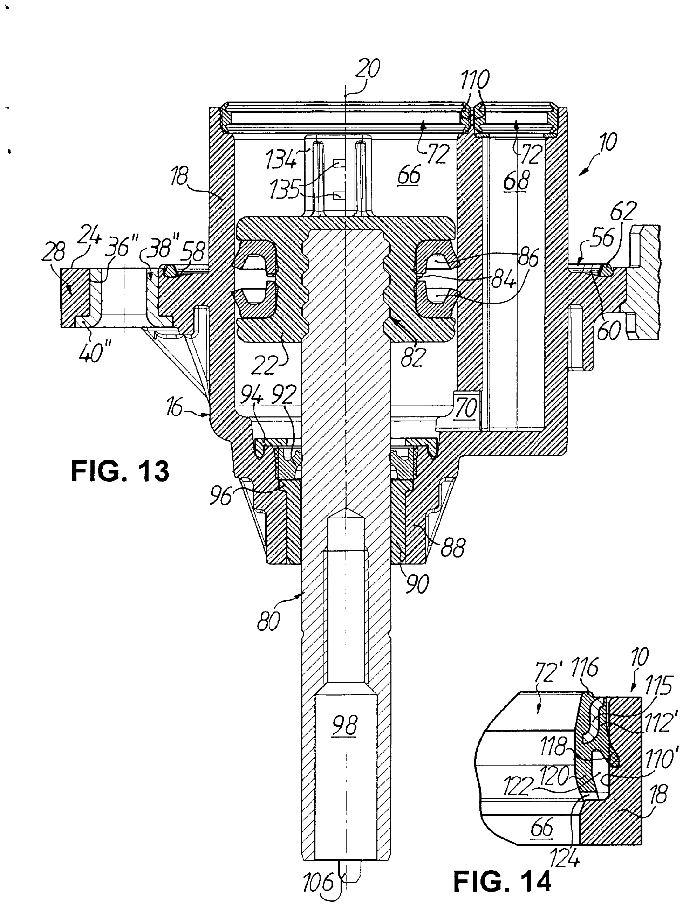

Insoweit stellen die Fig. 1 bis 13 ein bevorzugtes Ausführungsbeispiel der Erfindung dar, die Fig. 14 bis 20 hingegen zeigen Varianten der Druckdichtungen und Alternativen der Sensorik zu weiteren Ausführungsbeispielen. In allen Zeichnungen - und in der folgenden Beschreibung - wurde auf eine nähere Darstellung bzw. Erläuterung der zu betätigenden Getriebestellglieder (z.B. Schaltstangen mit Schaltgabeln) verzichtet, weil diese Elemente und deren Funktion dem Fachmann hinreichend bekannt sind und diesbezügliche Ausführungen für das Verständnis der vorliegenden Erfindung nicht erforderlich erscheinen.

### DETAILLIERTE BESCHREIBUNG DER AUSFÜHRUNGSBEISPIELE

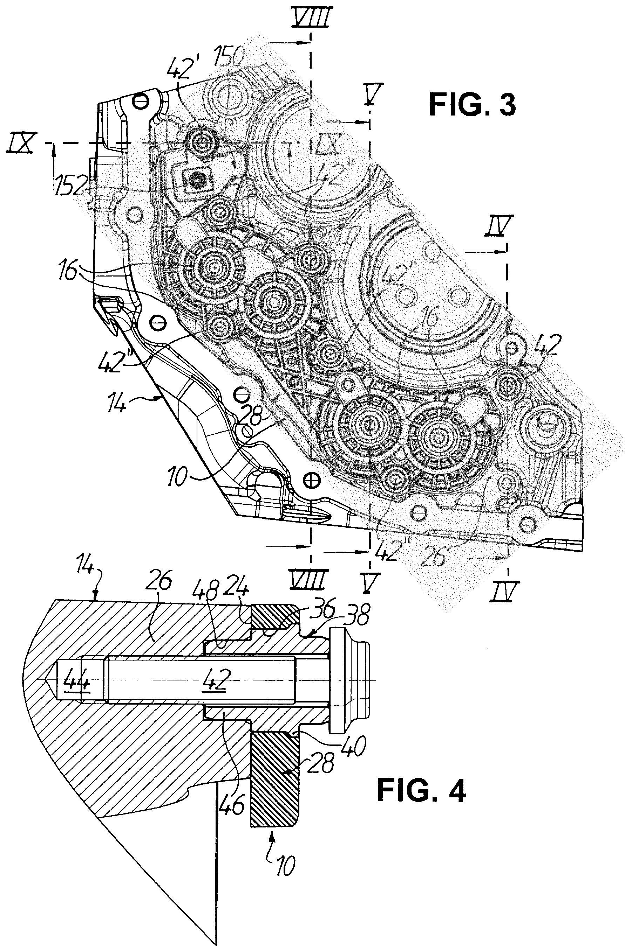

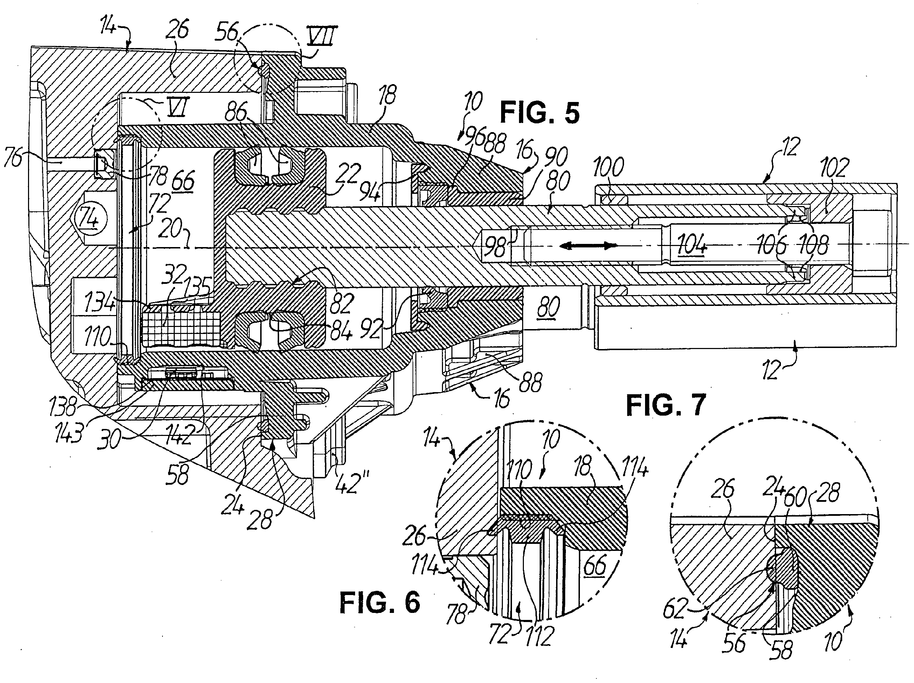

In den Figuren beziffert das Bezugszeichen 10 allgemein eine hydraulische Betätigungsvorrichtung für die Betätigung von Stellgliedern, z.B. Schaltstangen 12 (in Fig. 5 angedeutet) mit Schaltgabeln (nicht gezeigt), in einem Kraftfahrzeuggetriebe, von dem in den Fig. 3 bis 9 Teile des Getriebegehäuses 14 zu sehen sind. Die Betätigungsvorrichtung 10 umfasst wenigstens zwei, in den dargestellten Ausführungsbeispielen vier Stellzylinder 16, die jeweils ein Zylindergehäuse 18 und einen darin entlang einer Zylinderachse 20 längsverschieblich geführten Stellkolben 22 aufweisen, der beidseitig hydraulisch beaufschlagbar und mit einem der Stellglieder auf noch zu beschreibende Weise wirkverbunden ist.

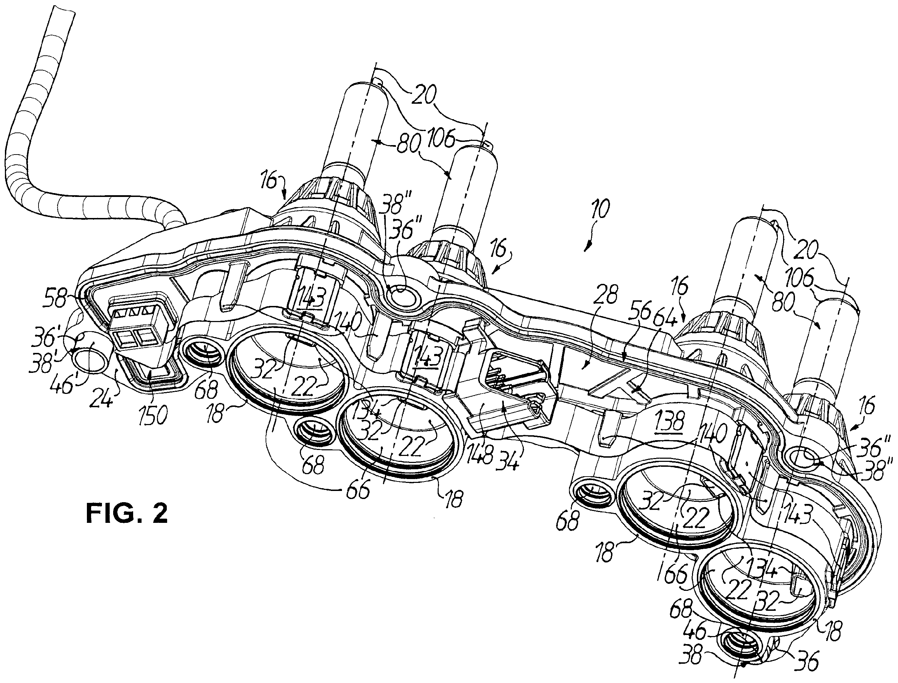

Die Stellzylinder 16 sind auf besondere Weise zu einer Einheit zusammengefasst, die über eine Flanschfläche 24 von einer Seite an einer Trennwand 26 des Getriebegehäuses 14 anflanschbar ist, und zwar sind die Zylindergehäuse 18 der Stellzylinder 16 einstückig mit einer quer zu den Zylinderachsen 20 verlaufenden Flanschplatte 28, an der die Flanschfläche 24 ausgebildet ist, aus einem Kunststoff, beispielsweise Polyphtalamid (PPA) mit einem vorbestimmten Glasfaseranteil von z.B. 50%, spritzgegossen. Hierbei stehen die Zylindergehäuse 18 in Richtung der Zylinderachsen 20 wenigstens auf der Seite der Flanschfläche 24 über die Flanschplatte 28 hinaus vor, wie insbesondere in den Fig. 2, 5, 13, 18 und 19 zu erkennen ist, so dass die Zylindergehäuse 18 im montierten Zustand der Betätigungsvorrichtung 10 teilweise in der Trennwand 26 des Getriebegehäuses 14 "versenkt" sind bzw. dort "eintauchen" (vgl. Fig. 5).

Wie nachfolgend ebenfalls noch näher beschrieben werden wird ist jedem Zylindergehäuse 18 der Betätigungsvorrichtung 10 ein Sensor 30 (siehe die Fig. 5 und 15 bis 17) zur Positionserfassung eines am jeweiligen Stellkolben 22 angebrachten Signalelements 32 zugeordnet, wobei in der Einheit eine mit den Sensoren 30 signalverbundene elektrische Schnittstelle 34 (vgl. die Fig. 2, 10 und 15) integriert ist, über welche die Sensoren 30 gemeinsam kontaktierbar sind.

Zur Befestigung der Betätigungsvorrichtung 10 am bzw. im Getriebegehäuse 14 ist die Flanschplatte 28 mit einer Mehrzahl von, im dargestellten Ausführungsbeispiel insgesamt sieben über den Umfang am Flanschplattenrand verteilten, senkrecht zur Flanschfläche 24 verlaufenden Befestigungslöchern 36, 36', 36" versehen, zu denen Einzelheiten den Fig. 4, 8, 9, 11 und 12 zu entnehmen sind. Demgemäß ist jedes Befestigungsloch 36, 36', 36" mit einer metallischen Stützhülse 38, 38', 38" ausgekleidet, die auf einer von der Flanschfläche 24 abgewandten Seite mit einem Zugbund 40, 40', 40" für eine Befestigungsschraube 42, 42', 42" versehen ist, die sich mit Radialspiel durch die jeweilige Stützhülse 38, 38', 38" hindurch erstreckt und im montierten Zustand der Betätigungsvorrichtung 10 in eine zugeordnete Gewindebohrung 44, 44', 44" (vgl. die Fig. 4, 8 und 9) der Trennwand 26 des Getriebegehäuses 14 eingeschraubt ist, um die Flanschfläche 24 der Flanschplatte 28 gegen die Trennwand 26 zu ziehen.

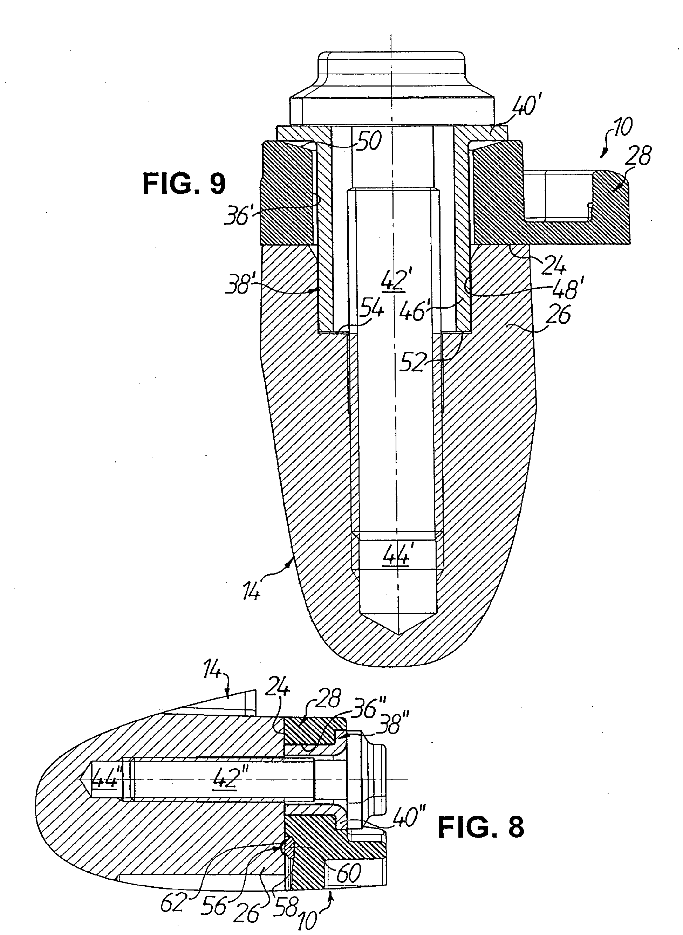

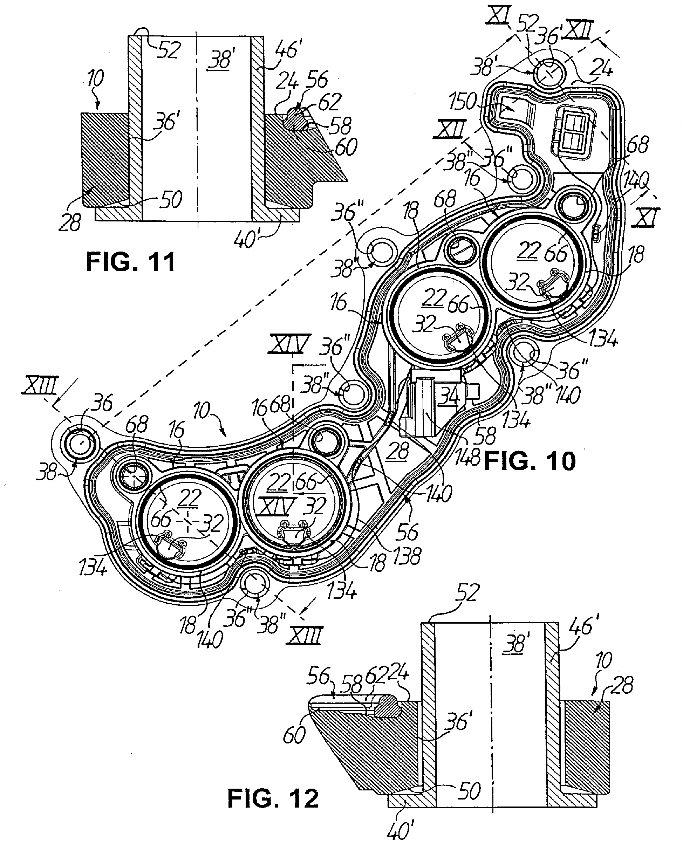

Hierbei bilden die in der Ebene der Flanschfläche 24 gesehen am weitesten voneinander entfernten Befestigungslöcher ein Festlager-Befestigungsloch 36 und ein Loslager-Befestigungsloch 36', an denen die Stützhülsen 38, 38' mit Zentrierfortsätzen 46, 46' für einen formschlüssigen Eingriff in zugeordneten Zentrieraussparungen 48, 48' in der Trennwand 26 des Getriebegehäuses 14 über die Flanschfläche 24 vorstehen (siehe die Fig. 4 und 9). Während das Festlager-Befestigungsloch 36 die zugeordnete Stützhülse 38, welche schon beim Spritzgießen der Flanschplatte 28 im Kunststoff mit eingebettet werden kann, radialspielfrei umgibt, ist das Loslager-Befestigungsloch 36' gemäß den Fig. 10 und 12 als mit dem Festlager-Befestigungsloch 36 ausgefluchtetes Langloch gestaltet, in dem die zugeordnete Stützhülse 38' entsprechend der Ausfluchtung des Langlochs bewegbar aufgenommen ist, so dass Abstandstoleranzen ausgeglichen werden können. Die übrigen fünf Stützhülsen 38'' hingegen enden just an der Flanschfläche 24 oder kurz davor (vgl. Fig. 8) und können ebenfalls radialspielfrei beim Spritzgießen der Flanschplatte 28 im Kunststoff mit eingebettet werden.

Eine weitere Besonderheit der Loslager-Befestigungssituation ist in den Fig. 9, 11 und 12 ebenfalls gezeigt: Die Flanschplatte 28 ist auf der von der Flanschfläche 24 abgewandten Seite um das Loslager-Befestigungsloch 36' herum nämlich mit einer Schräge 50 versehen, die ein geringfügiges Einfedern des Zugbunds 40' an der dem Loslager-Befestigungsloch 36' zugeordneten Stützhülse 38' gestattet bevor Letztere mit einer ringförmigen Stirnfläche 52 an einer in der zugeordneten Zentrieraussparung 48' vorgesehenen ringförmigen Anschlagfläche 54 zur Anlage gelangt. Zur Vereinfachung der Darstellung ist in Fig. 9 der Zustand unmittelbar vor dem Einfedern des Zugbunds 40' gezeigt. Der Kraftfluss wird hier ausgehend vom Kopf der Befestigungsschraube 42' also aufgeteilt: ein Teil der Anzugskraft geht direkt über den Hülsenabschnitt der Stützhülse 38' und die aneinander anliegenden Flächen 52, 54 in die Trennwand 26 des Getriebegehäuses 14; der andere Teil der Anzugskraft wird über den tellerfederartig wirkenden Zugbund 40' in die Flanschplatte 28 geleitet und drückt Letztere mit der Flanschfläche 24 spielfrei gegen die Gegenfläche an der Trennwand 26 des Getriebegehäuses 14.

Zur Abdichtung ist zwischen der Flanschplatte 28 der Betätigungsvorrichtung 10 und der Trennwand 26 des Getriebegehäuses 14 eine Flanschdichtung 56 vorgesehen. Genauer gesagt ist, wie insbesondere die Fig. 2, 5, 7, 8, 10 bis 13, 18 und 19 zeigen, die Flanschplatte 28 im Bereich der Flanschfläche 24 zwischen bzw. "innerhalb" der Befestigungslöcher 36, 36', 36" und um die Zylindergehäuse 18 herum mit einer umlaufenden Vertiefung 58 zur Aufnahme der Flanschdichtung 56 versehen. Letztere besteht im dargestellten Ausführungsbeispiel aus einem elastischen Dichtungswerkstoff, wie z.B. ACM (Elastomer auf Basis Acrylatkautschuk), der vor dem Aushärten pastös in zwei unmittelbar aufeinanderfolgenden Lagen mittels Nadeldosierung aufgebracht wird, wobei die Dosiernadel kontinuierlich dem Verlauf der Vertiefung 58 folgend über der Flanschfläche 24 verfahren wird. Hierbei wird in einem ersten Gang zunächst ein breiterer, einer verliersicheren Verankerung an der Flanschplatte 28 dienender Basisabschnitt 60 erzeugt, auf dem sodann in einem zweiten Gang ein dünnerer Dichtabschnitt 62 aufgetragen wird. Der dünnere Dichtabschnitt 62 steht, wie insbesondere in den Fig. 7, 8, 11 bis 13 und 19 zu erkennen ist, im fertigen, ausgehärteten Zustand der Flanschdichtung 56 über die Flanschfläche 24 vor, so dass er im montierten Zustand der Betätigungsvorrichtung 10 unter elastischer Verformung abdichtend gegen die Gegenfläche an der Trennwand 26 des Getriebegehäuses 14 gepresst ist, was in den Fig. 5, 7 und 8 zur Vereinfachung der Darstellung indes nicht gezeigt ist. Auf diese Weise ist eine Medientrennung durch die Betätigungsvorrichtung 10 möglich: so kann auf der in Fig. 5 linken, Ansteuerseite der Trennwand 26, auf der sich auch die Kupplung(en), Ventile etc. (nicht gezeigt) befinden können, mit einem anderen Hydrauliköl gearbeitet werden als auf der in Fig. 5 rechten, Übersetzungsseite der Trennwand 26, wo die Zahnradsätze (nicht dargestellt) angeordnet sind. Gemäß insbesondere den Fig. 1, 2 und 18 ist die Flanschplatte 28 im Übrigen zwischen den Befestigungslöchern 36, 36', 36" und den Zylindergehäusen 18 auf der Vorderseite und der Rückseite mittels Rippen gegen übermäßige, der Flanschdichtigkeit abträgliche Verformungen geeignet versteift, wie in den genannten Figuren exemplarisch mit 64 gekennzeichnet.

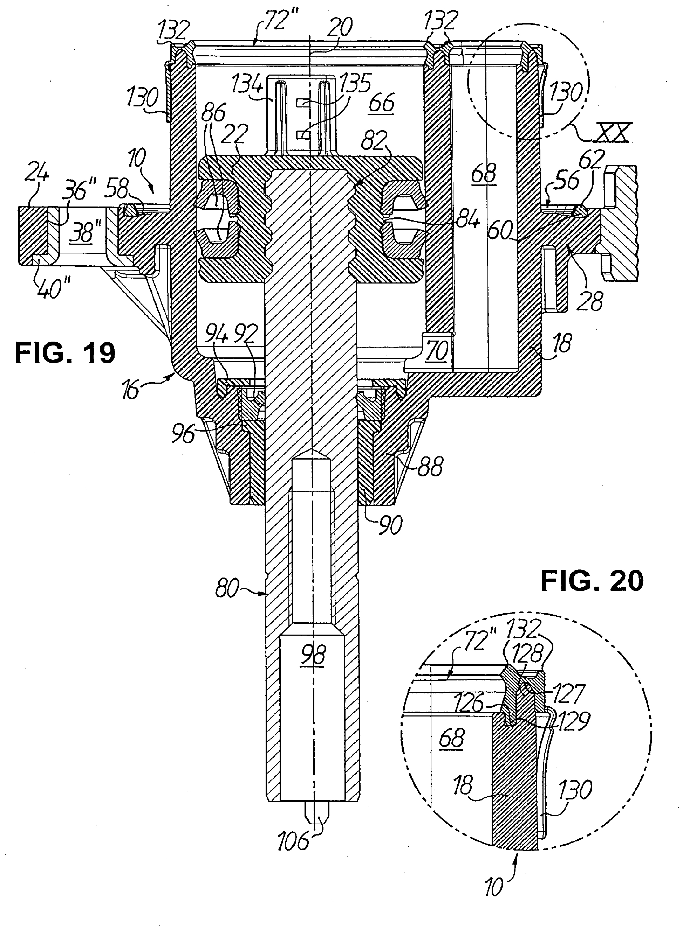

Weitere Einzelheiten der Stellzylinder 16, die mit ihren Zylindergehäusen 18 zu beiden Seiten von der Flanschplatte 28 vorkragen, sind insbesondere den Fig. 5, 13 und 19 zu entnehmen. Demgemäß hat jedes Zylindergehäuse 18 einen Zylinderraumabschnitt 66 zur Aufnahme des jeweiligen Stellkolbens 22 und - wie am besten in den Fig. 13 und 19 zu sehen ist - einen sich parallel zum Zylinderraumabschnitt 66 erstreckenden Druckanschlussabschnitt 68, der über einen quer zur Zylinderachse 20 verlaufenden Kanal 70 - von der Seite der Flanschfläche 24 aus gesehen - hinter dem Stellkolben 22 mit dem Zylinderraumabschnitt 66 fluidverbunden ist. Die Zylinderraumabschnitte 66 und die Druckanschlussabschnitte 68 der Stellzylinder 16 sind an ihren von der Flanschfläche 24 beabstandeten, offenen Enden jeweils mit einer Druckdichtung 72, 72', 72" versehen, welche, wie in Fig. 5 gezeigt, gegenüber der Trennwand 26 des Getriebegehäuses 14 abdichtet und die nachfolgend noch in verschiedenen Varianten beschrieben werden wird. Im Ergebnis ist der jeweilige Stellkolben 22 auf seiner einen, (Kreisflächen-)Seite über das offene Ende des Zylinderraumabschnitts 66 und auf seiner anderen, (Ringflächen-)Seite über das offene Ende des Druckanschlussabschnitts 68 druckbeaufschlagbar. In Fig. 5 ist der hierfür am offenen Ende des Zylinderraumabschnitts 66 benötigte Druckanschluss in der Trennwand 26 des Getriebegehäuses 14 bei 74 schematisch dargestellt; der am offenen Ende des Druckanschlussabschnitts 68 vorgesehene weitere Druckanschluss in der Trennwand 26 des Getriebegehäuses 14 ist indes nicht gezeigt. Für eine Entlüftung des Stellzylinders 16 zur Ansteuerseite hin ist in Fig. 5 ein Entlüftungskanal 76 mit einer Entlüftungsblende 78 angedeutet.

Gemäß den Fig. 5, 13 und 19 besteht der Stellkolben 22 ebenfalls aus einem Kunststoff, etwa Polyphtalamid (PPA) mit einem vorbestimmten Glasfaseranteil von z.B. 50%, der mittels Spritzgießen formschlüssig auf eine Kolbenstange 80 aus einem Leichtmetall, wie beispielsweise einer Aluminiumlegierung, aufgespritzt ist, wozu die Kolbenstange 80 endseitig am Außenumfang mit einer Profilierung 82 versehen ist. Der Stellkolben 22 weist außenumfangsseitig eine breite Ringnut 84 auf, in der zwei elastomere Nutringe 86 in an sich bekannter Weise so aufgenommen sind, dass deren Dichtlippen einander zugewandt sind. Die Nutringe 86 wirken mit der Innenwand des Zylinderraumabschnitts 66 dichtend zusammen, um die stirnseitigen Wirkflächen des Stellkolbens 22 voneinander zu trennen und dabei eine Druckdifferenz am Stellkolben 22 und somit eine Verschiebung des Stellkolbens 22 zu ermöglichen.

Wie am besten in den Fig. 1, 5, 13 und 19 zu sehen ist, ist jedes Zylindergehäuse 18 an einem über die Flanschplatte 28 auf der von der Flanschfläche 24 abgewandten Seite vorstehenden Ende einstückig mit einem außen verrippten Gehäusefortsatz 88 zur Aufnahme einer Führungsbuchse 90 aus einem Kunststoff, wie z.B. Polyphenylensulfid (PPS), ausgebildet, in der die mit dem jeweiligen Stellkolben 22 verbundene Kolbenstange 80 axial geführt ist. In dem Gehäusefortsatz 88 ist des Weiteren eine mit der Kolbenstange 80 dichtend zusammenwirkende, sich an die Führungsbuchse 90 in axialer Richtung zum Stellkolben 22 hin anschließende Stangendichtung 92 aufgenommen. Ein am Gehäusefortsatz 88 mittels Ultraschallschweißen angebrachter ringförmiger Deckel 94 aus einem Kunststoff, wie der Kunststoff des Zylindergehäuses 18, sichert sowohl die Führungsbuchse 90, die mit einem Ringbund 96 an einem Absatz im Gehäusefortsatz 88 anliegt, als auch die Stangendichtung 92 im Gehäusefortsatz 88.

Gemäß Fig. 5 ist an dem über den Gehäusefortsatz 88 in einer Richtung weg von der Flanschplatte 28 vorstehenden Ende der Kolbenstange 80 die - im dargestellten Ausführungsbeispiel rohrförmige - Schaltstange 12 angebracht, wozu die Kolbenstange 80 eine stirnseitig eingebrachte Gewindebohrung 98 aufweist. In der Schaltstange 12 sind mit axialem Abstand zwei ringförmige metallische Führungsteile 100, 102 befestigt, z.B. angeschweißt, über die die Schaltstange 12 im Wesentlichen radialspielfrei auf die Kolbenstange 80 aufgeschoben ist. Eine das in Fig. 5 rechte Führungsteil 102 durchgreifende Kopfschraube 104 ist in die Gewindebohrung 98 der Kolbenstange 80 eingeschraubt, um Schaltstange 12 und Kolbenstange 80 zug- und druckfest miteinander zu verbinden. Hierbei greifen am freien Ende der Kolbenstange 80 vorgesehene, entlang der Zylinderachse 20 vorstehende Vorsprünge 106 in zugeordnete, in Umfangsrichtung gesehen im Wesentlichen komplementär geformte Aussparungen 108 des in Fig. 5 rechten Führungsteils 102 ein, um die Kolbenstange 80 und damit den Stellkolben 22 gegen ein Verdrehen im Zylindergehäuse 18 an der an der Schaltstange 12 befestigten, geeignet abgestützten Schaltgabel (nicht gezeigt) zu sichern. Insoweit ist ersichtlich, dass die Schaltstange 12 nach Maßgabe der Druckbeaufschlagung des Stellkolbens 22 in Fig. 5 nach rechts oder links (siehe den Doppelpfeil) verschoben oder in einer bestimmten Axialstellung gehalten werden kann, wobei der Sensor 30 und das Signalelement 32 infolge der Verdrehsicherung des Stellkolbens 22 im Zylindergehäuse 18 stets in Überdeckung bleiben.

Einzelheiten zu den bereits erwähnten, verschiedenen Varianten der elastomeren, beispielsweise aus einem Elastomer auf Basis Acrylnitril-Butadien-Styrol-Kautschuk (NBR) geformten Druckdichtungen 72, 72', 72" sind den Fig. 5, 6, 13 und 16 (erste Variante), 14 (zweite Variante) und 18 bis 20 (dritte Variante) zu entnehmen.

Bei der ersten und zweiten Variante der Druckdichtungen 72, 72' sind die Zylinderraum- und Druckanschlussabschnitte 66, 68 der Zylindergehäuse 18 an ihren offenen Enden jeweils mit einer Ringaussparung 110, 110' zur Aufnahme der zugeordneten Druckdichtung 72, 72' versehen, die unter Druckbeaufschlagung die Dichtwirkung verstärkend ausgebildet ist und in beiden Fällen einen ringförmigen Grundkörper 112, 112' aufweist. Bei der ersten Variante der Druckdichtung 72 ist, wie insbesondere die Fig. 6 zeigt, zu beiden Längsseiten des Grundkörpers 112 eine umlaufende Dichtlippe 114 angeformt, die sich unter radialer Druckbeaufschlagung an die benachbarte Stirnfläche in der Ringaussparung 110 des Zylindergehäuses 18 bzw. an der Trennwand 26 des Getriebegehäuses 14 anlegt, um in axialer Richtung abzudichten.

Bei der zweiten Variante der Druckdichtung 72' hingegen ist gemäß Fig. 14 der ringförmige, mit einer einvulkanisierten Ringarmierung 115 ausgesteifte Grundkörper 112' auf einer Längsseite mit einem über das jeweilige offene Ende des Zylinderraumabschnitts 66 bzw. des Druckanschlussabschnitts 68 vorstehenden, in der Draufsicht gesehen ringförmigen und im Querschnitt gesehen balligen Dichtwulst 116 versehen. Auf der anderen Längsseite des Grundkörpers 112' ist radial außen eine radial wirkende Dichtlippe 118 angeformt, die zusammen mit einem sich in axialer Richtung erstreckenden, radial inneren Grundkörperfortsatz 120 eine Ringkammer 122 begrenzt, welche über radial verlaufende Durchbrüche 124 im Grundkörperfortsatz 120 druckbeaufschlagbar ist, um die Druckdichtung 72' mit ihrem Dichtwulst 116 ringkolbenartig gegen die Trennwand 26 des Getriebegehäuses 14 zu pressen. Diesen beiden Varianten der Druckdichtungen 72, 72' ist insoweit gemein, dass sie grundsätzlich geeignet sind, unter Druckbeaufschlagung etwa vorhandene Axialspalte problemlos dicht zu überbrücken.

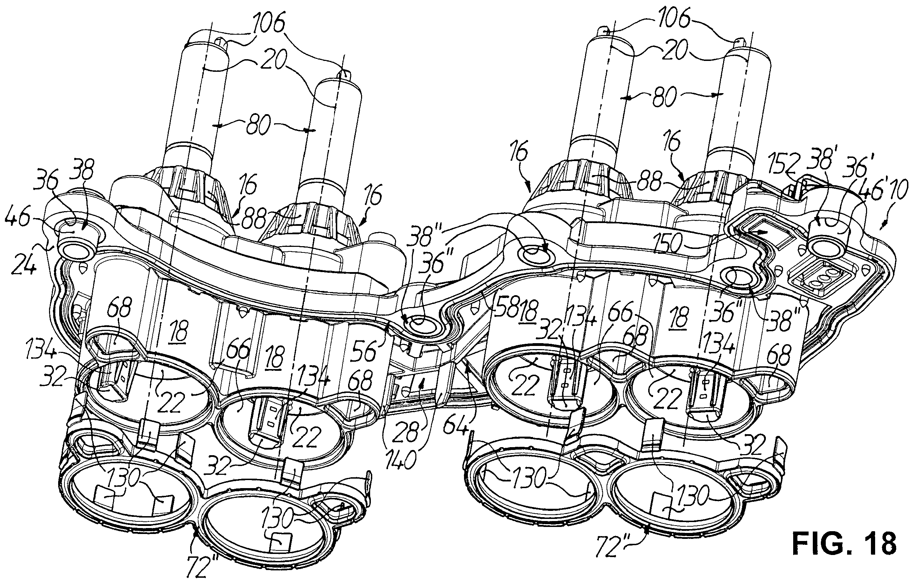

Bei der in den Fig. 18 bis 20 dargestellten dritten Variante der Druckdichtungen 72" sind wenigstens die Druckdichtungen an den offenen Enden des Zylinderraumabschnitts 66 und des Druckanschlussabschnitts 68 eines jeden Zylindergehäuses 18, im Ausführungsbeispiel der Fig. 18 sogar sämtliche trennwandseitigen Druckdichtungen von jeweils zwei Zylindergehäusen 18 montagefreundlich zu einer Formdichtung zusammengefasst, die auf die offenen Enden aufsteckbar ausgebildet ist. Hierzu sind an den offenen Enden der Zylindergehäuse 18 sowie an den Druckdichtungen 72" Axialnuten 126 bzw. 127 ausgebildet, in die axial vorspringende Stege 128 bzw. 129 am jeweils anderen Teil einsteckbar sind. Außen an den Druckdichtungen 72" einteilig angeformte Laschen 130 dienen bei diesem Ausführungsbeispiel zur Sicherung gegen ein Verlieren der jeweiligen Druckdichtung 72" im unmontierten Zustand der Betätigungsvorrichtung 10, wobei die Laschen 130 mit einem geeigneten Klebstoff am Außenumfang der Zylindergehäuse 18 befestigt sind. In dem im bzw. am Getriebegehäuse 14 montierten Zustand der Betätigungsvorrichtung 10 dichten stirnseitig an den Druckdichtungen 72" vorgesehene Dichtlippen 132 gegenüber der Trennwand 26 des Getriebegehäuses 14 ab und halten die jeweilige Druckdichtung 72" in Position.

Eingangs wurde schon angesprochen, dass die mittels der Stellzylinder 16 der Betätigungsvorrichtung 10 unabhängig voneinander bewirkbaren, axialen Stellbewegungen hubsensiert sind, wozu jedem Stellzylinder 16 ein Sensor 30 und Signalelement 32 zugeordnet ist. In den dargestellten Ausführungsbeispielen ist hierzu, wie am besten in den Fig. 5, 16 und 17 zu sehen ist, jeder Stellkolben 22 am Rand seiner Stirnfläche mit einem beim Spritzgießen des Stellkolbens 22 einteilig angeformten Sensierfortsatz 134 versehen, an dem ein Magnet als Signalelement 32 durch Kunststoffum- bzw. -anspritzen angebracht ist. Der Magnet wird hierbei durch NdFeB-Partikel gebildet, die mittels eines Kunststoffs, z.B. Polyphenylensulfid (PPS) zu einer spritzgießfähigen "Magnetmasse" gebunden sind. Beim Spritzgießen fließt diese Masse in am Sensierfortsatz 134 vorgesehene Aussparungen 135 und Hinterschnitte 136 (siehe die Fig. 5, 13, 16, 17 und 19), so dass das Signalelement 32 im Ergebnis durch Formschluss verliersicher am Stellkolben 22 befestigt ist.

Was die Anbindung des Sensors 30 am jeweiligen Zylindergehäuse 18 angeht, sind in den Figuren beispielhaft zwei Alternativen gezeigt, denen gemein ist, dass die Sensoren 30, hier Hall-Elemente, auf einer dünnen Flexleiterplatte 138, z.B. auf Basis von Polyimid-Folien, bestückt sind, über die die Sensoren 30 mit der elektrischen Schnittstelle 34 signalverbunden sind. Die Flexleiterplatte 138 ist der Außenkontur der Zylindergehäuse 18 folgend auf der Seite der Flanschfläche 24 der Einheit - und damit in der Trennwand 26 des Getriebegehäuses 14 geschützt - verlegt, wie am besten in den Fig. 2, 10 und 17 zu sehen ist (in Fig. 18 ist die Flexleiterplatte nicht eingezeichnet). Dabei sind nahe den Zylindergehäusen 18 Zungen 140 zum Halten und Führen der Flexleiterplatte 138 einstückig an der Flanschplatte 28 angeformt.

Gemäß insbesondere den Fig. 2, 5 und 10 ist nun bei der ersten Sensoralternative jedes Zylindergehäuse 18 außenumfangsseitig mit einer Aufnahmeaussparung 142 für den zugeordneten Sensor 30 versehen. Die Flexleiterplatte 138 ist auf einer Seite mit den Sensoren 30 bestückt und trägt auf der anderen Seite im Bereich der Sensoren 30 Deckel 143 aus Kunststoff, die mit der Flexleiterplatte 138 z.B. verklebt sind und dazu dienen, die Aufnahmeaussparungen 142 mit den darin aufgenommenen Sensoren 30 schützend zu verschließen. Im dargestellten Ausführungsbeispiel sind die Deckel 143 mit dem jeweiligen Zylindergehäuse 18 laserverschweißt.

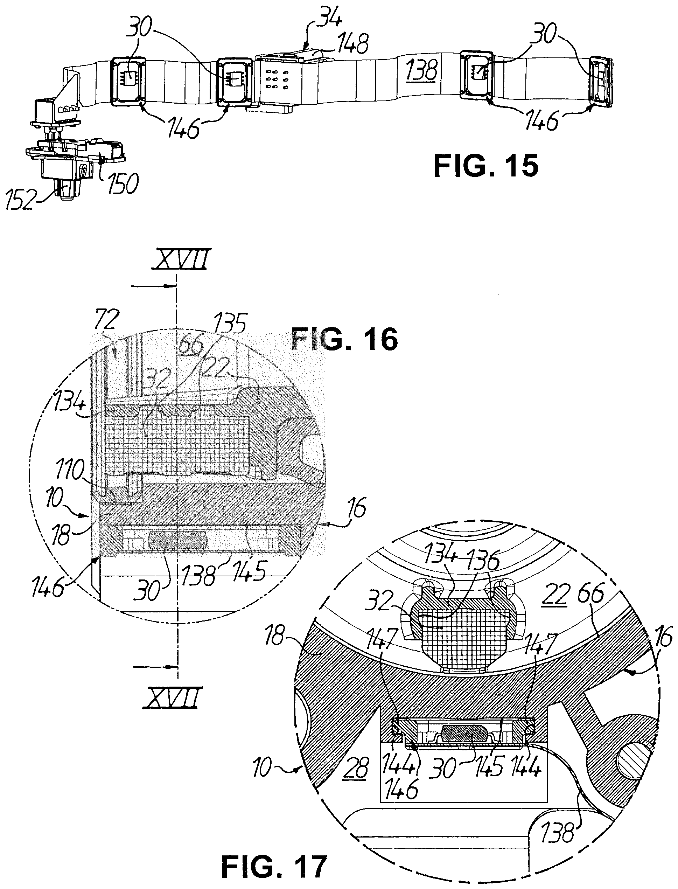

Bei der in den Fig. 15 bis 17 gezeigten zweiten Sensoralternative weist jedes Zylindergehäuse 18 außenumfangsseitig einen von zwei parallelen, einander zugewandten Längsnuten 144 seitlich begrenzten Aufnahmeabschnitt 145 für den zugeordneten Sensor 30 auf. Die auf der Flexleiterplatte 138 bestückten Sensoren 30 sind auf ein und derselben Seite der Flexleiterplatte 138 jeweils von einem Rahmen 146 umgeben, der mit dem jeweiligen Sensor 30 und der Flexleiterplatte 138 vermittels eines in den Figuren nicht zu erkennenden Dichtmaterials, beispielsweise einem UV und thermisch härtenden 1K Epoxydharz, vergossen ist. Der Rahmen 146 weist auf voneinander abgewandten Seiten zwei quer zur Flexleiterplatte 138 verlaufende, parallele Stege 147 auf, die in die Längsnuten 144 am Aufnahmeabschnitt 145 des jeweiligen Zylindergehäuses 18 einsteckbar sind, um dort den zugeordneten Sensor 30 formschlüssig festzulegen. Bei beiden Sensorvarianten ist somit der Sensor 30 möglichst nahe am jeweils zu erfassenden Signalelement 32 angeordnet.

Die ebenfalls auf der Flexleiterplatte 138 vorbestückte elektrische Schnittstelle 34 ist im Übrigen gemäß den Fig. 2 und 10 mit ihrem Kunststoffgehäuse 148 an der Flanschplatte 28 und einem der Zylindergehäuse 18 mittels Laserschweißen befestigt.

In den Fig. 1 bis 3, 10, 15 und 18 ist schließlich noch angedeutet, dass ein Sensor 150, z.B. ein Hallelement, zur Drehzahlsensierung am Kraftfahrzeuggetriebe und/oder ein Anschluss 152 für einen solchen Sensor (nicht gezeigt) - das in den Fig. 1 und 2 dargestellte Kabel führt zu diesem - in der Einheit, genauer in der Flanschplatte 28 integriert und zur gemeinsamen Kontaktierung ebenfalls über die Flexleiterplatte 138 mit der elektrischen Schnittstelle 34 signalverbunden sein kann. Bei Montage der Betätigungsvorrichtung 10 im Kraftfahrzeuggetriebe muss dann nur noch ein Stecker in die elektrische Schnittstelle 34 eingesteckt werden, um sämtliche Sensoren elektrisch mit der Getriebesteuerung zu verbinden.

Eine hydraulische Betätigungsvorrichtung für die Betätigung von Stellgliedern in einem Kraftfahrzeuggetriebe umfasst wenigstens zwei Stellzylinder, die jeweils ein Zylindergehäuse und einen darin entlang einer Zylinderachse längsverschieblich geführten Stellkolben aufweisen, der hydraulisch beaufschlagbar und mit einem der Stellglieder wirkverbunden ist. Die Stellzylinder sind zu einer Einheit zusammengefasst, die über eine Flanschfläche von einer Seite an einer Trennwand eines Getriebegehäuses des Kraftfahrzeuggetriebes anflanschbar ist. Dazu sind die Zylindergehäuse einstückig mit einer quer zu den Zylinderachsen verlaufenden Flanschplatte aus einem Kunststoff spritzgegossen, an der die Flanschfläche ausgebildet ist. Die Zylindergehäuse stehen hierbei in Richtung der Zylinderachsen wenigstens auf der Seite der Flanschfläche über die Flanschplatte hinaus vor, so dass der Bauraumbedarf der Bestätigungsvorrichtung im bzw. am Getriebegehäuse gering ist.

### BEZUGSZEICHENLISTE

- 10: Betätigungsvorrichtung
- 12: Schaltstange
- 14: Getriebegehäuse
- 16: Stellzylinder
- 18: Zylindergehäuse
- 20: Zylinderachse
- 22: Stellkolben
- 24: Flanschfläche
- 26: Trennwand
- 28: Flanschplatte
- 30: Sensor
- 32: Signalelement
- 34: elektrische Schnittstelle
- 36, 36', 36": Befestigungsloch
- 38, 38', 38": Stützhülse
- 40, 40', 40": Zugbund
- 42, 42', 42": Befestigungsschraube
- 44, 44', 44": Gewindebohrung
- 46, 46': Zentrierfortsatz
- 48, 48': Zentrieraussparung
- 50: Schräge
- 52: Stirnfläche
- 54: Anschlagfläche
- 56: Flanschdichtung
- 58: Vertiefung
- 60: Basisabschnitt
- 62: Dichtabschnitt
- 64: Rippen
- 66: Zylinderraumabschnitt
- 68: Druckanschlussabschnitt
- 70: Kanal
- 72, 72', 72": Druckdichtung
- 74: Druckanschluss
- 76: Entlüftungskanal
- 78: Entlüftungsblende
- 80: Kolbenstange
- 82: Profilierung
- 84: Ringnut
- 86: Nutring
- 88: Gehäusefortsatz
- 90: Führungsbuchse
- 92: Stangendichtung
- 94: Deckel
- 96: Ringbund
- 98: Gewindebohrung
- 100: Führungsteil
- 102: Führungsteil
- 104: Kopfschraube
- 106: Vorsprung
- 108: Aussparung
- 110, 110': Ringaussparung
- 112, 112': Grundkörper
- 114: Dichtlippe
- 115: Ringarmierung
- 116: Dichtwulst
- 118: Dichtlippe
- 120: Grundkörperfortsatz
- 122: Ringkammer
- 124: Durchbruch
- 126: Axialnut
- 127: Axialnut
- 128: Steg
- 129: Steg
- 130: Lasche
- 132: Dichtlippe
- 134: Sensierfortsatz
- 135: Aussparung
- 136: Hinterschnitt
- 138: Flexleiterplatte
- 140: Zunge
- 142: Aufnahmeaussparung
- 143: Deckel
- 144: Längsnut
- 145: Aufnahmeabschnitt
- 146: Rahmen
- 147: Steg
- 148: Kunststoffgehäuse
- 150: Sensor
- 152: Anschluss

## Patentansprüche

1. Hydraulische Betätigungsvorrichtung (10) für die Betätigung von Stellgliedern (12) in einem Kraftfahrzeuggetriebe, mit wenigstens zwei Stellzylindern (16), die jeweils ein Zylindergehäuse (18) und einen darin entlang einer Zylinderachse (20) längsverschieblich geführten Stellkolben (22) aufweisen, der hydraulisch beaufschlagbar und mit einem der Stellglieder (12) wirkverbunden ist, wobei die Stellzylinder (16) zu einer Einheit zusammengefasst sind, die über eine Flanschfläche (24) von einer Seite an einer Trennwand (26) eines Getriebegehäuses (14) des Kraftfahrzeuggetriebes anflanschbar ist, **dadurch gekennzeichnet, dass** die Zylindergehäuse (18) der Stellzylinder (16) einstückig mit einer quer zu den Zylinderachsen (20) verlaufenden Flanschplatte (28) aus einem Kunststoff spritzgegossen sind, an der die Flanschfläche (24) ausgebildet ist, wobei die Zylindergehäuse (18) in Richtung der Zylinderachsen (20) wenigstens auf der Seite der Flanschfläche (24) über die Flanschplatte (28) hinaus vorstehen.

2. Hydraulische Betätigungsvorrichtung (10) nach Anspruch 1, **dadurch gekennzeichnet, dass** die Flanschplatte (28) mit einer Mehrzahl von über den Umfang verteilten, senkrecht zur Flanschfläche (24) verlaufenden Befestigungslöchern (36, 36', 36") versehen ist, die mit Stützhülsen (38, 38', 38") ausgekleidet sind, welche auf einer von der Flanschfläche (24) abgewandten Seite mit einem Zugbund (40, 40', 40'') für Befestigungsschrauben (42, 42', 42'') versehen sind, die sich durch die Stützhülsen (38, 38', 38'') hindurch erstrecken und zur Montage der Betätigungsvorrichtung (10) in zugeordnete Gewindebohrungen (44, 44', 44") der Trennwand (26) des Getriebegehäuses (14) einschraubbar sind, um die Flanschfläche (24) gegen die Trennwand (26) zu ziehen.

3. Hydraulische Betätigungsvorrichtung (10) nach Anspruch 2, **dadurch gekennzeichnet, dass** die am weitesten voneinander entfernten Befestigungslöcher ein Festlager-Befestigungsloch (36) und ein Loslager-Befestigungsloch (36') bilden, an denen die Stützhülsen (38, 38') mit Zentrierfortsätzen (46, 46') für einen formschlüssigen Eingriff in zugeordneten Zentrieraussparungen (48, 48') in der Trennwand (26) des Getriebegehäuses (14) über die Flanschfläche (24) vorstehen, während die übrigen Stützhülsen (38'') vor oder an der Flanschfläche (24) enden, wobei das Festlager-Befestigungsloch (36) die zugeordnete Stützhülse (38) spielfrei umgibt, während das Loslager-Befestigungsloch (36') als mit dem Festlager-Befestigungsloch (36) ausgefluchtetes Langloch gestaltet ist, in dem die zugeordnete Stützhülse (38') entsprechend der Ausfluchtung des Langlochs beweglich aufgenommen ist, so dass Abstandstoleranzen ausgleichbar sind.

4. Hydraulische Betätigungsvorrichtung (10) nach Anspruch 3, **dadurch gekennzeichnet, dass** die Flanschplatte (28) auf der von der Flanschfläche (24) abgewandten Seite um das Loslager-Befestigungsloch (36') herum mit einer Schräge (50) versehen ist, die ein Einfedern des Zugbunds (40') an der dem Loslager-Befestigungsloch (36') zugeordneten Stützhülse (38') gestattet bevor Letztere mit einer Stirnfläche (52) an einer in der zugeordneten Zentrieraussparung (48') vorgesehenen Anschlagfläche (54) zur Anlage gelangt.

5. Hydraulische Betätigungsvorrichtung (10) nach einem der vorhergehenden Ansprüche, **dadurch gekennzeichnet, dass** die Flanschplatte (28) im Bereich der Flanschfläche (24) mit einer umlaufenden Vertiefung (58) zur Aufnahme einer Flanschdichtung (56) versehen ist, die aus einem elastischen Dichtungswerkstoff in zwei Lagen aufgetragen einen breiteren, einer verliersicheren Verankerung an der Flanschplatte (28) dienenden Basisabschnitt (60) und einen dünneren, auf dem Basisabschnitt (60) angeordneten Dichtabschnitt (62) aufweist, der über die Flanschfläche (24) vorsteht.

6. Hydraulische Betätigungsvorrichtung (10) nach einem der vorhergehenden Ansprüche, **dadurch gekennzeichnet, dass** jedes Zylindergehäuse (18) einen Zylinderraumabschnitt (66) zur Aufnahme des jeweiligen Stellkolbens (22) und einen sich parallel zum Zylinderraumabschnitt (66) erstreckenden, hinter dem Stellkolben (22) mit dem Zylinderraumabschnitt (66) fluidverbundenen Druckanschlussabschnitt (68) aufweist, die an ihren von der Flanschfläche (24) beabstandeten, offenen Enden jeweils mit einer Druckdichtung (72, 72', 72'') versehen sind, welche gegenüber der Trennwand (26) des Getriebegehäuses (14) abdichtet, so dass der Stellkolben (22) auf seiner einen Seite über das offene Ende des Zylinderraumabschnitts (66) und auf seiner anderen Seite über das offene Ende des Druckanschlussabschnitts (68) druckbeaufschlagbar ist.

7. Hydraulische Betätigungsvorrichtung (10) nach Anspruch 6, **dadurch gekennzeichnet, dass** die Zylinderraum- und Druckanschlussabschnitte (66, 68) an ihren offenen Enden jeweils mit einer Ringaussparung (110, 110') zur Aufnahme der zugeordneten, unter Druckbeaufschlagung die Dichtwirkung verstärkend ausgebildeten Druckdichtung (72, 72') versehen sind, wobei die Druckdichtung (72, 72') einen ringförmigen Grundkörper (112, 112') aufweist, der entweder zu beiden Längsseiten mit einer Dichtlippe (114) versehen ist, die unter radialer Druckbeaufschlagung in axialer Richtung abdichtet, oder auf einer Längsseite mit einem über das jeweilige offene Ende vorstehenden Dichtwulst (116) versehen ist, während auf der anderen Längsseite eine radial wirkende Dichtlippe (118) vorgesehen ist, die zusammen mit einem Grundkörperfortsatz (120) eine Ringkammer (122) begrenzt, welche über radial verlaufende Durchbrüche (124) im Grundkörperfortsatz (120) druckbeaufschlagbar ist, um die Druckdichtung (72') mit ihrem Dichtwulst (116) kolbenartig gegen die Trennwand (26) zu pressen.

8. Hydraulische Betätigungsvorrichtung (10) nach Anspruch 6, **dadurch gekennzeichnet, dass** wenigstens die Druckdichtungen an den offenen Enden des Zylinderraumabschnitts (66) und des Druckanschlussabschnitts (68) eines jeden Zylindergehäuses (18) zu einer Formdichtung (72") zusammengefasst sind, die auf die offenen Enden aufsteckbar ausgebildet ist.

9. Hydraulische Betätigungsvorrichtung (10) nach einem der vorhergehenden Ansprüche, **dadurch gekennzeichnet, dass** jedes Zylindergehäuse (18) an einem über die Flanschplatte (28) auf der von der Flanschfläche (24) abgewandten Seite vorstehenden Ende mit einem Gehäusefortsatz (88) zur Aufnahme einer Führungsbuchse (90) versehen ist, in der eine mit dem jeweiligen Stellkolben (22) verbundene Kolbenstange (80) geführt ist.

10. Hydraulische Betätigungsvorrichtung (10) nach Anspruch 9, **dadurch gekennzeichnet, dass** in dem Gehäusefortsatz (88) auch eine mit der Kolbenstange (80) zusammenwirkende, sich an die Führungsbuchse (90) in axialer Richtung anschließende Stangendichtung (92) aufgenommen ist, wobei ein am Gehäusefortsatz (88) angebrachter ringförmiger Deckel (94) sowohl die Führungsbuchse (90) als auch die Stangendichtung (92) im Gehäusefortsatz (88) sichert.

11. Hydraulische Betätigungsvorrichtung (10) nach einem der vorhergehenden Ansprüche, **dadurch gekennzeichnet, dass** jedem Zylindergehäuse (18) ein Sensor (30) zur Positionserfassung eines am jeweiligen Stellkolben (22) angebrachten Signalelements (32) zugeordnet ist, wobei in der Einheit eine mit den Sensoren (30) zur Positionserfassung signalverbundene elektrische Schnittstelle (34) integriert ist, über welche die Sensoren (30) zur Positionserfassung gemeinsam kontaktierbar sind.

12. Hydraulische Betätigungsvorrichtung (10) nach Anspruch 11, **dadurch gekennzeichnet, dass** ein Sensor (150) zur Drehzahlsensierung am Kraftfahrzeuggetriebe und/oder ein Anschluss (152) für einen Sensor zur Drehzahlsensierung in der Einheit integriert und zur gemeinsamen Kontaktierung mit der elektrischen Schnittstelle (34) signalverbunden ist.

13. Hydraulische Betätigungsvorrichtung (10) nach Anspruch 11 oder 12, **dadurch gekennzeichnet, dass** zumindest die Sensoren (30) zur Positionserfassung und die Schnittstelle (34) über eine Flexleiterplatte (138) signalverbunden sind, die der Außenkontur der Zylindergehäuse (18) folgend auf der Seite der Flanschfläche (24) der Einheit verlegt ist.

14. Hydraulische Betätigungsvorrichtung (10) nach Anspruch 13, **dadurch gekennzeichnet, dass** jedes Zylindergehäuse (18) außenumfangsseitig eine Aufnahmeaussparung (142) für den zugeordneten Sensor (30) zur Positionserfassung aufweist, wobei die Flexleiterplatte (138) auf einer Seite mit den Sensoren (30) zur Positionserfassung bestückt ist und auf der anderen Seite im Bereich der Sensoren (30) zur Positionserfassung Deckel (143) trägt, die dazu dienen, die Aufnahmeaussparungen (142) mit den darin aufgenommenen Sensoren (30) zur Positionserfassung schützend zu verschließen.

15. Hydraulische Betätigungsvorrichtung (10) nach Anspruch 13, **dadurch gekennzeichnet, dass** jedes Zylindergehäuse (18) außenumfangsseitig einen von zwei parallelen, einander zugewandten Längsnuten (144) seitlich begrenzten Aufnahmeabschnitt (145) für den zugeordneten Sensor (30) zur Positionserfassung aufweist, wobei jeder auf der Flexleiterplatte (138) bestückte Sensor (30) zur Positionserfassung auf ein und derselben Seite der Flexleiterplatte (138) von einem Rahmen (146) umgeben ist, der mit dem jeweiligen Sensor (30) zur Positionserfassung und der Flexleiterplatte (138) vermittels eines Dichtmaterials vergossen ist und auf voneinander abgewandten Seiten zwei quer zur Flexleiterplatte (138) verlaufende, parallele Stege (147) aufweist, die in die Längsnuten (144) am Aufnahmeabschnitt (145) des jeweiligen Zylindergehäuses (18) einsteckbar sind, um den zugeordneten Sensor (30) zur Positionserfassung festzulegen.

16. Hydraulische Betätigungsvorrichtung (10) nach einem der Ansprüche 13 bis 15, **dadurch gekennzeichnet, dass** nahe den Zylindergehäusen (18) Zungen (140) zum Halten und Führen der Flexleiterplatte (138) einstückig an der Flanschplatte (24) angeformt sind.

17. Hydraulische Betätigungsvorrichtung (10) nach einem der Ansprüche 11 bis 16, **dadurch gekennzeichnet, dass** jeder Stellkolben (22) mit einem Sensierfortsatz (134) versehen ist, an dem ein Magnet als Signalelement (32) durch Kunststoffumspritzen angebracht ist.

## Claims

1. Hydraulic actuating device (10) for the actuation of setting elements (12) in a motor vehicle transmission, comprising at least two actuating cylinders (16) each having a cylinder housing (18) and an actuating piston (22), which is guided in the cylinder housing to be longitudinally displaceable along a cylinder axis (20) and which can be acted on hydraulically and is operatively connected with one of the setting elements (12), wherein the actuating cylinders (16) are combined to form a unit which can be flange-mounted by way of a flange surface (24) from one side on a partition wall (26) of a transmission casing (14) of the motor vehicle transmission, **characterized in that** the cylinder housings (18) of the actuating cylinders (16) are integrally injection-molded with a flange plate (28) of plastic material which extends transversely to the cylinder axes (20) and at which the flange surface (24) is formed, wherein the cylinder housings (18) project beyond the flange plate (28) in the direction of the cylinder axes (20) at least on the side of the flange surface (24) .

2. Hydraulic actuating device (10) according to claim 1, **characterized in that** the flange plate (28) is provided with a plurality of mounting holes (36, 36', 36"), which are distributed over the circumference and extend perpendicularly to the flange surface (24) and which are lined with support sleeves (38, 38', 38"), the sleeves being provided on a side remote from the flange surface (24) with a tensioning collar (40, 40', 40") for fastening screws (42, 42', 42") which extend through the support sleeves (38, 38', 38") and which for mounting of the actuating device (10) can be screwed into associated threaded bores (44, 44', 44") of the partition wall (26) of the transmission casing (14) so as to draw the flange surface (24) against the partition wall (26).

3. Hydraulic actuating device (10) according to claim 2, **characterized in that** the mounting holes furthest away from one another form a fixed bearing mounting hole (36) and a movable bearing mounting hole (36') at which the support sleeves (38, 38') project beyond the flange surface (24) by centering projections (46, 46') for mechanically positive engagement in associated centering recesses (48, 48') in the partition wall (26) of the transmission casing (14), whereas the remaining support sleeves (38") end in front of or at the flange surface (24), wherein the fixed bearing mounting hole (36) surrounds the associated support sleeve (38) free of play, whilst the movable bearing mounting hole (36') is formed as an oblong hole which is aligned with the fixed bearing mounting hole (36) and in which the associated support sleeve (38') is movably received in correspondence with the alignment of the oblong hole so that compensation can be provided for tolerances in spacing.

4. Hydraulic actuating device (10) according to claim 3, **characterized in that** the flange plate (28) is provided, on the side remote from the flange surface (24), around the movable bearing mounting hole (36') with a chamfer (50) which allows deflection of the tensioning collar (40') at the support sleeve (38'), which is associated with the movable bearing mounting hole (36'), before the sleeve comes into contact by an end surface (52) with an abutment surface (54) provided in the associated centering recess (48').

5. Hydraulic actuating device (10) according to any one of the preceding claims, **characterized in that** the flange plate (28) is provided in the region of the flange surface (24) with an encircling depression (58) for reception of a flange seal (56) which comprises a wider base section (60) serving as a captive anchorage at the flange plate (28), and a thinner sealing section (62), which is arranged on the base section (60) and projects beyond the flange surface (24), of a resilient sealing material coated in two layers.

6. Hydraulic actuating device (10) according to any one of the preceding claims, **characterized in that** each cylinder housing (18) has a cylinder chamber section (66) for reception of the respective actuating piston (22) and a pressure connecting section (68) which extends parallel to the cylinder chamber section (66) and is in fluid connection behind the actuating piston (22) with the cylinder chamber section (66), the sections each being provided at the open end thereof spaced from the flange surface (24) with a respective pressure seal (72, 72', 72'') sealing relative to the partition wall (26) of the transmission casing (14) so that the actuating piston (22) can be loaded with pressure on one side thereof by way of the open end of the cylinder chamber section (66) and on the other side thereof by way of the open end of the pressure connecting section (68).

7. Hydraulic actuating device (10) according to claim 6, **characterized in that** the cylinder chamber sections (66) and pressure connecting sections (68) are each provided at the open end thereof with an annular recess (110, 110') for reception of the associated pressure seal (72, 72'), which is constructed to amplify the sealing action under pressure loading, wherein the pressure seal (72, 72') has an annular base body (112, 112') which either is provided on both longitudinal sides with a sealing lip (114) sealing under radial pressure loading in axial direction or is provided on one longitudinal side with a sealing bead (116) protruding beyond the respective open end, whilst on the other longitudinal side a radially acting sealing lip (118) is provided which together with a base body projection (120) bounds an annular chamber (122) able to be loaded with pressure by way of radially extending passages (124) in the base body projection (120) so as to press the pressure seal (72') by its sealing bead (116) in the manner of a piston against the partition wall (26).

8. Hydraulic actuating device (10) according to claim 6, **characterized in that** at least the pressure seals at the open ends of the cylinder chamber section (66) and the pressure connecting section (68) of each cylinder housing (18) are combined to form a shaped seal (72'') which is constructed so as to be able to be plugged onto the open ends.

9. Hydraulic actuating device (10) according to any one of the preceding claims, **characterized in that** each cylinder housing (18) is provided at an end which projects beyond the flange plate (28) on the side remote from the flange surface (24), with a housing projection (88) for reception of a guide bush (90), in which a piston rod (80) connected with the respective actuating piston (22) is guided.

10. Hydraulic actuating device (10) according to claim 9, **characterized in that** a rod seal (92) co-operating with the piston rod (80) and adjoined to the guide bush (90) in axial direction is also received in the housing projection (88), wherein an annular cover (94) mounted on the housing projection (88) secures both the guide bush (90) and the rod seal (92) in the housing projection (88).

11. Hydraulic actuating device (10) according to any one of the preceding claims, **characterized in that** a sensor (30) for positional detection of a signal element (32) mounted on the respective actuating piston (22) is associated with each cylinder housing (18), wherein an electrical interface (34) which is in signal connection with the sensors (30) for positional detection and by way of which the sensors (30) for positional detection can be contacted in common is integrated in the unit.

12. Hydraulic actuating device (10) according to claim 11, **characterized in that** a sensor (150) for rotational speed sensing at the motor vehicle transmission and/or a terminal (152) for a sensor for rotational speed sensing is or are integrated in the unit and disposed in signal connection with the electrical interface (34) for the common contact-making.

13. Hydraulic actuating device (10) according to claim 11 or 12, **characterized in that** at least the sensors (30) for positional detection and the interface (34) are in signal connection by way of a flexible circuit board (138) which is placed on the side of the flange surface (24) of the unit to follow the external contour of the cylinder housings (18).

14. Hydraulic actuating device (10) according to claim 13, **characterized in that** each cylinder housing (18) has at the outer circumferential side a receiving recess (142) for the associated sensor (30) for positional detection, wherein the flexible circuit board (138) on one side is equipped with the sensors (30) for positional detection and on the other side carries in the region of the sensors (30) for positional detection covers (143) serving the purpose of protectively closing the receiving recesses (142) with the sensors (30) for positional detection received therein.

15. Hydraulic actuating device (10) according to claim 13, **characterized in that** each cylinder housing (18) has at the outer circumferential side a receiving section (145), which is laterally bounded by two parallel longitudinal grooves (144) facing one another, for the associated sensor (30) for positional detection, wherein each sensor (30) for positional detection fitted to the flexible circuit board (138) is surrounded on one and the same side of the flexible circuit board (138) by a frame (146) which is encapsulated together with the respective sensor (30) for positional detection and the flexible circuit board (138) by means of a sealing material and has on mutually remote sides two parallel webs (147) which extend transversely to the flexible circuit board (138) and which are insertable into the longitudinal grooves (144) at the receiving section (145) of the respective cylinder housing (18) so as to fix the associated sensor (30) for positional detection.

16. Hydraulic actuating device (10) according to any one of claims 13 to 15, **characterized in that** tongues (140) for holding and guiding the flexible circuit board (138) are integrally formed on the flange plate (24) adjacent to the cylinder housings (18).

17. Hydraulic actuating device (10) according to any one of claims 11 to 16, **characterized in that** each of the actuating pistons (22) is provided with a sensing projection (134) on which a magnet as the signal element (32) is mounted by injection-molded encapsulation by plastic material.

## Revendications

1. Dispositif d'actionnement hydraulique (10) destiné à actionner des éléments de réglage (12) dans une transmission de véhicule automobile, avec au moins deux cylindres positionneurs (16) qui présentent respectivement un logement de cylindre (18) et un piston de positionnement (22) guidé à l'intérieur de celui-ci de façon longitudinalement coulissante le long d'un axe de cylindre (20), lequel piston de positionnement peut être sollicité hydrauliquement et est fonctionnellement relié à l'un des éléments de réglage (12), dans lequel les cylindres positionneurs (16) sont assemblés à une unité qui peut être bridée via une surface de bride (24) depuis un côté contre une paroi de séparation (26) d'un logement de transmission (14) de la transmission de véhicule automobile, **caractérisé en ce que** les logements de cylindre (18) des cylindres positionneurs (16) sont moulés par injection dans une matière plastique en une seule pièce avec une plaque de bride (28) se déroulant transversalement aux axes de cylindre (20), contre laquelle est conçue la surface de bride (24), dans lequel les logements de cylindre (18) dépassent au-delà de la plaque de bride (28) dans la direction des axes de cylindre (20) au moins sur le côté de la surface de bride (24).

2. Dispositif d'actionnement hydraulique (10) selon la revendication 1, **caractérisé en ce que** la plaque de bride (28) est dotée d'une pluralité de trous de fixation (36, 36', 36") se déroulant transversalement à la surface de bride (24) et répartis sur la périphérie, qui sont revêtus de manchons d'appui (38, 38', 38"), lesquels sont dotés, sur un côté opposé à la surface de bride (24), d'un épaulement de traction (40, 40', 40") pour des vis de fixation (42, 42', 42") qui s'étendent à travers les manchons d'appui (38, 38', 38") et peuvent être vissées dans des alésages filetés (44, 44', 44") attribués de la paroi de séparation (26) du logement de transmission (14) pour le montage du dispositif d'actionnement hydraulique (10) afin de tirer la surface de bride (24) contre la paroi de séparation (26).

3. Dispositif d'actionnement hydraulique (10) selon la revendication 2, **caractérisé en ce que** les trous de fixation les plus éloignés les uns des autres forment un trou de fixation de palier fixe (36) et un trou de fixation de palier libre (36') contre lesquels les manchons d'appui (38, 38') dépassent par-dessus la surface de bride (24) avec des extensions de centrage (46, 46') pour un engagement par liaison de forme dans des évidements de centrage (48, 48') attribués dans la paroi de séparation (26) du logement de transmission (14), pendant que les manchons d'appui (38") restants se terminent avant ou contre la surface de bride (24), dans lequel le trou de fixation de palier fixe (36) entoure sans jeu le manchon d'appui (38) attribué, pendant que le trou de fixation de palier libre (36') est configuré en tant que trou longitudinal aligné avec le trou de fixation de palier fixe (36), dans lequel trou longitudinal les manchons d'appui (38') attribués sont reçus de façon déplaçable en fonction de l'alignement du trou longitudinal de sorte que des écarts de distance puissent être compensés.

4. Dispositif d'actionnement hydraulique (10) selon la revendication 3, **caractérisé en ce que**, sur le côté opposé à la surface de bride (24) autour du trou de fixation de palier libre (36'), la plaque de bride (28) est dotée d'une pente (50) qui autorise un amortissement de l'épaulement de traction (40') contre le manchon d'appui (38') attribué au trou de fixation de palier libre (36') avant que ce dernier ne vienne avec une surface frontale (52) s'appliquer contre une surface de butée (54) prévue dans l'évidement de centrage (48') attribué.

5. Dispositif d'actionnement hydraulique (10) selon l'une des revendications précédentes, **caractérisé en ce que** la plaque de bride (28) est dotée d'un renfoncement (58) périphérique dans la région de la surface de bride (24) pour recevoir une étanchéité de bride (56) qui présente, dans un matériau d'étanchéité appliqué en deux couches, une partie de base (60) plus large servant d'ancrage imperdable contre la plaque de bride (28) et une partie d'étanchéité (62) plus mince agencée sur la partie de base (60), laquelle partie d'étanchéité dépasse par-dessus la surface de bride (24).

6. Dispositif d'actionnement hydraulique (10) selon l'une des revendications précédentes, **caractérisé en ce que** chaque logement de cylindre (18) présente une partie de chambre de cylindre (66) pour recevoir le piston de positionnement (22) respectif et une partie de raccord de pression (68) fluidiquement relié derrière le piston de positionnement (22) à la partie de chambre de cylindre (66) et s'étendant en parallèle de la partie de chambre de cylindre (66), qui contre leurs extrémités ouvertes et espacées de la surface de bride (24) sont respectivement dotées d'une étanchéité de pression (72, 72', 72"), laquelle étanchéifie à l'égard de la paroi de séparation (26) du logement de transmission (14), de sorte que le piston de positionnement (22) puisse être sollicité par pression sur l'un de ses côtés via l'extrémité ouverte de la partie de chambre de cylindre (66) et sur l'autre de ses côtés via l'extrémité ouverte de la partie de raccord de pression (68).

7. Dispositif d'actionnement hydraulique (10) selon la revendication 6, **caractérisé en ce que** les parties de chambre de cylindre et de raccord de pression (66, 68) sont respectivement dotées, contre leurs extrémités ouvertes, d'un évidement annulaire (110, 110') pour recevoir l'étanchéité de pression (72, 72') attribuée conçue de façon à renforcer l'action d'étanchéité sous la sollicitation de pression, dans lequel l'étanchéité de pression (72, 72') présente un corps de base (112, 112') annulaire qui soit est doté sur les deux côtés longitudinaux d'une lèvre d'étanchéité (114) qui étanchéifie dans la direction axiale sous sollicitation de pression radiale, soit est doté sur un côté longitudinal d'un bourrelet d'étanchéité (116) dépassant par-dessus l'extrémité ouverte respective, pendant que sur l'autre côté longitudinal est prévue une lèvre d'étanchéité agissant radialement (118), qui ensemble avec une extension de corps de base (120) délimite une chambre annulaire (122), laquelle peut être sollicitée par pression via des passages (124) se déroulant radialement dans l'extension de corps de base (120) pour pousser à la façon d'un piston l'étanchéité de pression (72') avec son bourrelet d'étanchéité (116) contre la paroi de séparation (26).

8. Dispositif d'actionnement hydraulique (10) selon la revendication 6, **caractérisé en ce qu'**au moins les étanchéités de pression contre les extrémités ouvertes de la partie de chambre de cylindre (66) et de la partie de raccord de pression (68) de chaque logement de cylindre (18) sont assemblées en une étanchéité de forme (72") qui est conçue de façon à s'enficher sur les extrémités ouvertes.

9. Dispositif d'actionnement hydraulique (10) selon l'une quelconque des revendications précédentes, **caractérisé en ce que** chaque logement de cylindre (18) est doté, contre une extrémité dépassant sur le côté opposé à la surface de bride (24) par-dessus une plaque de bride (28), d'une extension de logement (88) pour recevoir une douille de guidage (90) dans laquelle une tige de piston (80) reliée au piston de positionnement (22) respectif est guidée.

10. Dispositif d'actionnement hydraulique (10) selon la revendication 9, **caractérisé en ce que** dans l'extension de logement (88) est également reçue une étanchéité de tige (92) se rattachant à la douille de guidage (90) dans la direction axiale et coopérant avec la tige de piston (80), dans lequel un couvercle (94) annulaire monté contre l'extension de logement (88) protège dans l'extension de logement (88) tant la douille de guidage (90) que l'étanchéité de tige (92).

11. Dispositif d'actionnement hydraulique (10) selon l'une des revendications précédentes, **caractérisé en ce qu'**à chaque logement de cylindre (18) est attribué un capteur (30) de saisie de position d'un élément de signal (32) monté contre le piston de positionnement (22) respectif, dans lequel une interface (34) électrique reliée par signal aux capteurs (30) de saisie de position est intégrée dans l'unité, via laquelle interface les capteurs (30) de saisie de position peuvent être mis en contact ensemble.

12. Dispositif d'actionnement hydraulique (10) selon la revendication 11, **caractérisé en ce qu'**un capteur (150) est intégré pour détecter une vitesse de rotation contre la transmission de véhicule automobile et/ou un raccord (152) est intégré pour un capteur pour détecter une vitesse de rotation dans l'unité, et est relié à l'interface (34) électrique pour la mise en contact commune.

13. Dispositif d'actionnement hydraulique (10) selon la revendication 11 ou 12, **caractérisé en ce qu'**au moins les capteurs (30) de saisie de position et l'interface (34) sont reliés par signal via une carte de circuit souple (138) qui est posée à la suite du contour extérieur du logement de cylindre (18) sur le côté de la surface de bride (24) de l'unité.

14. Dispositif d'actionnement hydraulique (10) selon la revendication 13, **caractérisé en ce que** chaque logement de cylindre (18) présente du côté de la périphérie extérieure un évidement de réception (142) pour le capteur (30) de saisie de position attribué, dans lequel la carte de circuit souple (138) est sur un côté équipée des capteurs (30) de saisie de position, et sur l'autre côté dans la région des capteurs (30) de saisie de position porte des couvercles (143) qui servent à refermer en les protégeant les évidements de réception (142) avec les capteurs (30) de saisie de position reçus dans ceux-ci.

15. Dispositif d'actionnement hydraulique (10) selon la revendication 13, **caractérisé en ce que** chaque logement de cylindre (18) présente du côté de la périphérie extérieure une partie d'évidement (145) latéralement délimitée par deux rainures longitudinales (144) parallèles, tournées l'une vers l'autre pour le capteur (30) de saisie de position attribué, dans lequel chaque capteur (30) de saisie de position équipé sur la carte de circuit souple (138) est entouré, sur un et unique côté de la carte de circuit souple (138), d'un cadre (146) qui est encapsulé avec le capteur (30) de saisie de position respectif et la carte de circuit souple (138) au moyen d'un matériau d'étanchéité, et présente sur des côtés opposés l'un à l'autre deux traverses (147) parallèles se déroulant transversalement à la carte de circuit souple (138), lesquelles traverses peuvent être enfichées dans les rainures longitudinales (144) contre la partie d'évidement (145) du logement de cylindre (18) respectif pour fixer le capteur (30) de saisie de position attribué.

16. Dispositif d'actionnement hydraulique (10) selon l'une des revendications 13 à 15, **caractérisé en ce qu'**à proximité des logements de cylindre (18) des languettes (140) sont formées d'une seule pièce contre la surface de bride (24) pour maintenir et guider la carte de circuit souple (138).

17. Dispositif d'actionnement hydraulique (10) selon l'une des revendications 11 à 16, **caractérisé en ce que** chaque piston de positionnement (22) est doté d'une extension de détection (134) contre laquelle un aimant est monté par moulage par injection en tant qu'élément de signal (32).
